# EUROPEAN PATENT APPLICATION

(11) **EP 4 485 987 A1**
(43) Date of publication of application: **01.01.2025**
(21) Application number: 23778137.2
(22) Date of filing: 27.03.2023
(51) Int. Cl.: H04W 8/08, H04W 80/10

(54) **COMMUNICATION METHOD AND APPARATUS**

(30) Priority: 28.03.2022 CN 202210317093
(71) Applicant: Huawei Technologies Co., Ltd., Shenzhen, Guangdong 518129 (CN)
(72) Inventor: XU, Yishan, Shenzhen, Guangdong 518129 (CN); ZHU, Hualin, Shenzhen, Guangdong 518129 (CN)
(74) Representative: Goddar, Heinz J.
(86) International application number: PCT/CN2023/084185
(87) International publication number: WO 2023/185772

(57) **Abstract**

This application relates to the field of communication technologies. A communication method and apparatus are provided, to support data transmission over a multi-access session through multiple 3GPP paths or multiple non-3GPP paths. Access technologies corresponding to a first transmission path and a second transmission path in the multi-access session are of a same access type. A session management device sends, to a mobility management device, tunnel information and access technology information that correspond to the transmission paths, where the access technology is used to determine an access network device. The mobility management device determines the access network device based on the access technology information, and sends the tunnel information to the access network device. In this application, the session management device sends, to the mobility management device, the access technology information which is a finer granularity than an access type, and the mobility management device can accurately identify a corresponding access network device based on the access technology information. The multi-access session management method is applicable to data transmission over a multi-access session supporting multiple 3GPP paths or multiple non-3GPP paths.

## Description

### CROSS-REFERENCE TO RELATED APPLICATIONS

This application claims priority to Chinese Patent Application No. 202210317093.5, filed with the China National Intellectual Property Administration on March 28, 2022 and entitled "COMMUNICATION METHOD AND APPARATUS", which is incorporated herein by reference in its entirety.

### TECHNICAL FIELD

Embodiments of this application relate to the communication field and the like, and in particular, to a communication method and apparatus.

### BACKGROUND

User equipment (user equipment, UE) and a user plane function (user plane function, UPF) network element may establish a multi-access protocol data unit (protocol data unit, PDU) session (multi-access PDU Session, MAPDU Session) for transmission of to-be-sent traffic flow data via a third generation partnership project (third generation partnership project, 3GPP) access network and/or a non-3GPP access network, to improve transmission efficiency.

Currently, a multi-access session supports transmission through two paths: a 3GPP path and a non-3GPP path, where an access network device for one of which is a 3GPP access network device, and an access network device for the other of which is a non-3GPP access network device. In future, the multi-access session will support transmission through multiple 3GPP paths or multiple non-3GPP paths. However, an existing multi-access session management method is not applicable to the multi-access session that supports multiple 3GPP paths or multiple non-3GPP paths.

### SUMMARY

Embodiments of this application provide a communication method and apparatus, to support data transmission of a multi-access session through multiple 3GPP paths or multiple non-3GPP paths.

According to a first aspect, a communication method is provided. An execution body of the method may be a session management device, or may be a component used in the session management device, for example, a chip or a processor. An example in which the execution body is the session management device is used below for description. Transmission paths in a multi-access session may include but are not limited to a first transmission path and a second transmission path. Access technologies corresponding to the first transmission path and the second transmission path are of a same access type. The access technologies corresponding to the first transmission path and the second transmission path are of a 3rd generation partnership project 3GPP access type. Alternatively, the access technologies corresponding to the first transmission path and the second transmission path are of a non-3rd generation partnership project 3GPP access type. First, the session management device obtains tunnel information corresponding to the transmission paths, and then the session management device sends, to a mobility management device, the tunnel information and access technology information that correspond to the transmission paths, where the access technology is used by the mobility management device to determine an access network device.

In this application, at least two of multiple transmission paths included in the multi-access session correspond to a same access type (for example, the 3GPP access type or the non-3GPP access type). If a conventional technology is still used, when the session management device sends an access type to the mobility management device, the mobility management device cannot identify a specific access type of an access network device to which the tunnel information (and other information) is to be sent. Therefore, this application proposes that the session management device sends, to the mobility management device, the access technology information which is a finer granularity than the access type, and the mobility management device can accurately identify a corresponding access network device based on the access technology information, that is, accurately identify each transmission path. In this way, the mobility management device may send the tunnel information (and the other information) to the corresponding access network device. The multi-access session management method is applicable to data transmission of the multi-access session that supports multiple 3GPP paths or multiple non-3GPP paths.

In a possible implementation, that the session management device sends, to the mobility management device, the tunnel information corresponding to the transmission paths and the access technology information corresponding to the transmission paths may mean that the session management device sends a transmission message to the mobility management device, where the transmission message includes first tunnel information and access technology information that correspond to the first transmission path, and second tunnel information and access technology information that correspond to the second transmission path. The session management device sends, to the mobility management device via one message, tunnel information and access technology information that correspond to all transmission paths included in the multi-access session. In this way, signalling transmission can be reduced.

In a possible implementation, that the session management device sends, to the mobility management device, the tunnel information corresponding to the transmission paths and the access technology information corresponding to the transmission paths may mean that the session management device sends, to the mobility management device, a first transmission message including first tunnel information and access technology information that correspond to the first transmission path, and sends, to the mobility management device, a second transmission message including second tunnel information and access technology information that correspond to the second transmission path. If other transmission paths are further included, the session management device may further send, to the mobility management device for each of the other transmission paths, a transmission message including tunnel information and access technology information that correspond to the transmission path.

In a possible implementation, the session management device may first receive first information from the mobility management device, and then the session management device sends, to the mobility management device, the tunnel information and the access technology information that correspond to the transmission paths. The first information may be used to obtain the tunnel information corresponding to the transmission paths, and the first information includes but is not limited to one or more of the following: a first quantity of transmission paths registered by a terminal device and one or more pieces of access technology information. The session management device may determine, based on the first information, tunnel information to be obtained or a quantity of pieces of tunnel information to be obtained. For example, when the first information indicates that the terminal device registers with a core network through three transmission paths or three different access technologies, the session management device determines that three pieces of tunnel information (for example, tunnel endpoint identifiers or address information) are to be obtained, so that a quantity of pieces of tunnel information to be obtained for establishing a multi-access session connection can be accurately learned of.

In a possible implementation, the session management device sends second information to a policy control device, where the second information is used to obtain steering information. Then, the session management device receives the steering information from the policy control device, where the steering information includes steering information of the first transmission path and the second transmission path. The steering information may be determined by the policy control device based on the second information. For example, the steering information may include but is not limited to one or more of the following: a steering mode, steering functionality, and a threshold value. In this application, a quantity of transmission paths included in the multi-access session may be greater than or equal to 2, and at least two transmission paths may correspond to a same access type. The steering information in this application may be determined based on the access technology (the access technology is a finer granularity than the access type), or determined based on three or more transmission paths, so that the steering information is better applicable to multiple possible forms of the multi-access session.

In a possible implementation, the second information includes but is not limited to one or more of the following: the first quantity of transmission paths registered by the terminal device, one or more access technologies, and a quantity of access technologies. Optionally, the second information is determined based on the first information.

In a possible implementation, the steering information indicates the terminal device to transmit data through a target transmission path, and the target transmission path is one or more of the transmission paths registered by the terminal device.

In a possible implementation, the session management device may assign the tunnel information corresponding to the transmission paths. For example, the session management device may assign, based on the first information, the tunnel information corresponding to the transmission paths. Specifically, the session management device may determine a tunnel quantity based on the first information, and then the session management device may assign tunnel information corresponding to the tunnel quantity. Optionally, the session management device may further send the tunnel information to a user plane device.

In a possible implementation, the session management device may receive, from a user plane device, the tunnel information corresponding to the transmission paths. For example, the session management device sends the first information to the user plane device, and receives, from the user plane device, the tunnel information corresponding to the transmission paths. For example, the user plane device determines a tunnel quantity based on the first information, and the user plane device may assign tunnel information corresponding to the tunnel quantity.

In a possible implementation, when the first transmission path and the second transmission path correspond to a same access technology, the session management device may further send indication information to the mobility management device, where the indication information indicates the first transmission path or the second transmission path.

In a possible implementation, the indication information includes one or more of the following: an identifier of an access sub-technology, an identifier of an access network device, an identifier of a path, and IPsec tunnel information.

In a scenario in which the multiple transmission paths correspond to a same access technology and a same access network device, the session management device indicates, via the indication information, a transmission path used by the mobility management device to send the tunnel information (and the other information), so that the mobility management device can determine an N2 interface, a next generation application protocol (next generation application protocol, NGAP) interface, or a logical N2 channel to which the tunnel information (and the other information) is to be sent. The multi-access session management method is applicable to the data transmission of the multi-access session that supports the multiple 3GPP paths or the multiple non-3GPP paths.

In a scenario in which the multiple transmission paths correspond to a same access technology but different access network devices, the session management device indicates, via fifth information, a transmission path used by the mobility management device to send the tunnel information (and the other information), so that the mobility management device can determine an access network device to which the tunnel information (and the other information) is sent. The multi-access session management method is applicable to the data transmission of the multi-access session that supports the multiple 3GPP paths or the multiple non-3GPP paths.

In a possible implementation, an access network device corresponding to the first transmission path is any one of the following: a 3GPP access network device, a trusted non-3GPP access network device, an untrusted non-3GPP access network device, or a wireline access gateway. An access network device corresponding to the second transmission path is any one of the following: a 3GPP access network device, a trusted non-3GPP access network device, an untrusted non-3GPP access network device, or a wireline access gateway.

For example, the 3GPP access network device is any one of the following: an eNodeB, an NG-RAN, or a gNodeB.

For example, the trusted non-3GPP access network device is any one of the following: a trusted non-3GPP gateway function TNGF, a trusted WLAN interworking function TWIF, or a trusted non-3GPP access point TNAP.

For example, the untrusted non-3 GPP access network device is any one of the following: a non-3GPP interworking function N3IWF.

For example, the wireline gateway is any one of the following: a wireline access gateway function W-AGF network element.

According to a second aspect, a communication method is provided. An execution body of the method may be a mobility management device, or may be a component used in the mobility management device, for example, a chip or a processor. An example in which the execution body is the mobility management device is used below for description. Transmission paths in a multi-access session may include but are not limited to a first transmission path and a second transmission path. Access technologies corresponding to the first transmission path and the second transmission path are of a same access type. For example, the access technologies corresponding to the first transmission path and the second transmission path are of a 3rd generation partnership project 3GPP access type. Alternatively, the access technologies corresponding to the first transmission path and the second transmission path are of a non-3rd generation partnership project 3GPP access type. First, the mobility management device receives, from a session management device, tunnel information and access technology information that correspond to the transmission paths. Then, the mobility management device may determine a first access network device based on access technology information corresponding to the first transmission path, and send, to the first access network device, first tunnel information corresponding to the first transmission path. The mobility management device may further determine a second access network device based on access technology information corresponding to the second transmission path, and send, to the second access network device, second tunnel information corresponding to the second transmission path.

In this application, at least two of multiple transmission paths included in the multi-access session correspond to a same access type (for example, the 3GPP access type or the non-3GPP access type). If a conventional technology is still used, when the session management device sends an access type to the mobility management device, the mobility management device cannot identify a specific access type of an access network device to which the tunnel information (and other information) is to be sent. Therefore, this application proposes that the session management device sends, to the mobility management device, the access technology information which is a finer granularity than the access type, and the mobility management device can accurately identify a corresponding access network device based on the access technology information, that is, accurately identify each transmission path. In this way, the mobility management device may send the tunnel information (and other information) to the corresponding access network device. The multi-access session management method is applicable to data transmission of the multi-access session that supports multiple 3GPP paths or multiple non-3GPP paths.

In a possible implementation, that the mobility management device receives, from the session management device, the tunnel information and the access technology information that correspond to the transmission paths may mean that the mobility management device receives a transmission message from the session management device, where the transmission message includes the first tunnel information and the access technology information that correspond to the first transmission path, and the second tunnel information and the access technology information that correspond to the second transmission path. The session management device sends, to the mobility management device via one message, tunnel information and access technology information that correspond to all transmission paths included in the multi-access session. In this way, signalling transmission can be reduced.

In a possible implementation, that the mobility management device receives, from the session management device, the tunnel information and the access technology information that correspond to the transmission paths may mean that the mobility management device receives, from the session management device, a first transmission message including the first tunnel information and the access technology information that correspond to the first transmission path; and receives, from the session management device, a second transmission message including the second tunnel information and the access technology information that correspond to the second transmission path. If other transmission paths are further included, the mobility management device may further receive, from the session management device for each of the other transmission paths, a transmission message including tunnel information and access technology information that correspond to the transmission path.

In a possible implementation, the mobility management device first sends first information to the session management device, and then the mobility management device receives, from the session management device, the tunnel information and the access technology information that correspond to the transmission paths. The first information is used to obtain the tunnel information corresponding to the transmission paths, and the first information includes one or more of the following: a first quantity of transmission paths registered by a terminal device and one or more pieces of access technology information. The session management device may determine, based on the first information, tunnel information or a quantity of pieces of tunnel information to be obtained. For example, when the first information indicates that the terminal device registers with a core network through three transmission paths or three different access technologies, the session management device determines that three pieces of tunnel information (for example, tunnel endpoint identifiers or address information) are to be obtained, so that a quantity of pieces of tunnel information to be obtained for establishing a multi-access session connection can be accurately learned of.

In a possible implementation, the mobility management device may further receive steering information of the first transmission path and the second transmission path, and then the mobility management device sends the steering information to the terminal device. Optionally, the steering information may be obtained based on the first information. For example, the steering information is determined by a policy control device based on second information, and the second information is determined based on the first information. For example, the steering information may include but is not limited to one or more of the following: a steering mode, steering functionality, and a threshold value. In this application, a quantity of transmission paths included in the multi-access session may be greater than or equal to 2, and at least two paths may correspond to a same access type. The steering information in this application may be determined based on the access technology (the access technology is a finer granularity than the access type), or determined based on three or more transmission paths, so that the steering information is better applicable to multiple possible forms of the multi-access session.

In a possible implementation, the second information includes but is not limited to one or more of the following: the first quantity of transmission paths registered by the terminal device, one or more access technologies, and a quantity of access technologies. Optionally, the second information is determined based on the first information.

In a possible implementation, the steering information indicates the terminal device to transmit data through a target transmission path, and the target transmission path is one or more of the transmission paths registered by the terminal device.

In a possible implementation, when the first transmission path and the second transmission path correspond to a same access technology, the mobility management device may further receive indication information from the session management device, where the indication information indicates the first transmission path or the second transmission path. The mobility management device may determine the first access network device based on the access technology information corresponding to the first transmission path and the indication information. That the mobility management device may further determine a second access network device based on access technology information corresponding to the second transmission path includes: The mobility management device determines the second access network device based on the access technology information corresponding to the second transmission path and the indication information.

In a possible implementation, the indication information includes one or more of the following: an identifier of an access sub-technology, an identifier of an access network device, an identifier of a path, and IPsec tunnel information.

In a scenario in which the multiple transmission paths correspond to a same access technology and a same access network device, the session management device indicates, via the indication information, a transmission path used by the mobility management device to send the tunnel information (and the other information), so that the mobility management device can determine an N2 interface, a next generation application protocol (next generation application protocol, NGAP) interface, or a logical N2 channel to which the tunnel information (and the other information) is to be sent. The multi-access session management method is applicable to the data transmission of the multi-access session that supports the multiple 3GPP paths or the multiple non-3GPP paths.

In a scenario in which the multiple transmission paths correspond to a same access technology but different access network devices, the session management device indicates, via fifth information, a transmission path used by the mobility management device to send the tunnel information (and the other information), so that the mobility management device can determine an access network device to which the tunnel information (and the other information) is sent. The multi-access session management method is applicable to the data transmission of the multi-access session that supports the multiple 3GPP paths or the multiple non-3GPP paths.

In a possible implementation, an access network device corresponding to the first transmission path is any one of the following: a 3GPP access network device, a trusted non-3GPP access network device, an untrusted non-3GPP access network device, or a wireline access gateway. An access network device corresponding to the second transmission path is any one of the following: a 3GPP access network device, a trusted non-3GPP access network device, an untrusted non-3GPP access network device, or a wireline access gateway.

For example, the 3GPP access network device is any one of the following: an eNodeB, an NG-RAN, or a gNodeB.

For example, the trusted non-3GPP access network device is any one of the following: a trusted non-3GPP gateway function TNGF, a trusted WLAN interworking function TWIF, or a trusted non-3GPP access point TNAP.

For example, the untrusted non-3 GPP access network device is any one of the following: a non-3GPP interworking function N3IWF.

For example, the wireline gateway is any one of the following: a wireline access gateway function W-AGF network element.

In a possible implementation, when the access network device corresponding to the first transmission path and the access network device corresponding to the second transmission path each are a non-3GPP access network device, the mobility management device may further receive third information from a first non-3GPP access network device on the first transmission path, where the third information includes one or more of the following: a quantity of internet protocol security child security associations IPsec child SAs established between the first non-3GPP access network device and the terminal device, a differentiated services code point DSCP value corresponding to each IPsec child SA, a quality of service flow identifier QFI associated with each IPsec child SA, and an identifier corresponding to each IPsec child SA. Then, the mobility management device may send the third information to a second non-3GPP access network device on the second transmission path, where the third information is used by the second non-3GPP access network device to establish a user plane resource with the terminal device. The pieces of information may be subsequently used as a reference for the second non-3GPP access network device. The second non-3GPP access network device may establish, adjust, or modify a user plane resource with UE based on the information. Because of reference to the pieces of information, the user plane resource established between the second non-3GPP access network device and the UE is similar to or the same as a user plane resource established between the first non-3GPP access network device and the UE. In this way, quality of service of different transmission paths may be equivalent or the same.

For example, the access network device corresponding to the first transmission path is the N3IWF, and the access network device corresponding to the second transmission path is the TNGF. Alternatively, the access network devices corresponding to the first transmission path and the second transmission path each are the N3IWF. Alternatively, the access network devices corresponding to the first transmission path and the second transmission path each are the TNGF.

In a possible implementation, in a registration process of the terminal device, the mobility management device may obtain access network information, where the access network information indicates information about an access technology used by the terminal device. Then, the mobility management device determines, based on the information about the access technology used by the terminal device, the first quantity of transmission paths registered by the terminal device or access technology information corresponding to the transmission paths. For example, the access network information includes one or more of the following: an access node type, an access technology type, an access node name, an access node identifier, and an internet protocol security IPsec identifier.

In a scenario in which the multiple transmission paths correspond to the same access network device, and the UE accesses the same access network device in different manners (for example, one manner is that the UE is connected to the N3IWF via a Wi-Fi AP, and another manner is that the UE is connected to the N3IWF via a standalone non-public network SNPN), from the perspective of the mobility management device, there is only one transmission path and one access technology (for example, an untrusted non-3GPP access technology). However, from the perspective of the UE, there are two transmission paths, and access technologies corresponding to the two transmission paths are different. One is a non-3GPP access technology in which the connection is performed via Wi-Fi, and the other is a non-3GPP access technology in which the connection is performed via the SNPN. In this example, in the registration process of the terminal device, the mobility management device may obtain the access network information. Subsequently, the mobility management device may accurately determine, based on the information about the access technology used by the terminal device, the first quantity of transmission paths registered by the terminal device or the access technology information corresponding to the transmission paths. The multi-access session management method is applicable to the data transmission of the multi-access session that supports the multiple 3GPP paths or the multiple non-3GPP paths.

A difference between a third aspect and the first aspect includes: In the first aspect, the session management device sends the access technology information to the mobility management device, so that the mobility management device identifies the corresponding access network device based on the access technology information, while in the third aspect, a session management device sends identifiers of transmission paths and/or an identifier of an access network device to a mobility management device, so that the mobility management device identifies a corresponding access network device based on access technology information. Other technical details are similar to or the same as those in any one of the first aspect and the possible implementations. In addition, technical effects are also similar or the same. Details are not described again.

According to a third aspect, a communication method is provided. An execution body of the method may be a session management device, or may be a component used in the session management device, for example, a chip or a processor. An example in which the execution body is the session management device is used below for description. Transmission paths in a multi-access session may include but are not limited to a first transmission path and a second transmission path. Access technologies corresponding to the first transmission path and the second transmission path are of a same access type. For example, the access technologies corresponding to the first transmission path and the second transmission path are of a 3rd generation partnership project 3GPP access type. Alternatively, the access technologies corresponding to the first transmission path and the second transmission path are of a non-3rd generation partnership project 3GPP access type. First, the session management device obtains tunnel information corresponding to the transmission paths, and then the session management device sends, to a mobility management device, the tunnel information and indication information that correspond to the transmission paths, where the indication information may be used by the mobility management device to determine an access network device. For example, the indication information includes identifiers of the transmission paths and/or an identifier of the access network device.

According to a fourth aspect, a communication method is provided. An execution body of the method may be a mobility management device, or may be a component used in the mobility management device, for example, a chip or a processor. An example in which the execution body is the mobility management device is used below for description. Transmission paths in a multi-access session may include but are not limited to a first transmission path and a second transmission path. Access technologies corresponding to the first transmission path and the second transmission path are of a same access type. For example, the access technologies corresponding to the first transmission path and the second transmission path are of a 3rd generation partnership project 3GPP access type. Alternatively, the access technologies corresponding to the first transmission path and the second transmission path are of a non-3rd generation partnership project 3GPP access type. First, the mobility management device receives, from a session management device, tunnel information and indication information that correspond to the transmission paths. Then, the mobility management device may determine a first access network device based on indication information corresponding to the first transmission path, and send, to the first access network device, first tunnel information corresponding to the first transmission path. The mobility management device may further determine a second access network device based on indication information corresponding to the second transmission path, and send, to the second access network device, second tunnel information corresponding to the second transmission path.

According to a fifth aspect, a communication apparatus is provided. The apparatus has functions of implementing any one of the foregoing aspects and the possible implementations of the foregoing aspects. These functions may be implemented by hardware, or may be implemented by hardware by executing corresponding software. The hardware or the software includes one or more functional modules corresponding to the foregoing functions.

According to a sixth aspect, a communication apparatus is provided, includes a processor, and optionally, further includes a memory. The processor is coupled to the memory. The memory is configured to store computer programs or instructions. The processor is configured to: execute some or all of the computer programs or instructions in the memory; and when the some or all of the computer programs or instructions are executed, implement a function in the method according to any one of the foregoing aspects and the possible implementations of the foregoing aspects.

In a possible implementation, the apparatus may further include a transceiver. The transceiver is configured to: send a signal processed by the processor, or receive a signal input into the processor. The transceiver may perform a sending action or a receiving action in any one of the aspects and the possible implementations of the aspects.

According to a seventh aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store computer programs or instructions. The processor is configured to: execute some or all of the computer programs or instructions in the memory; and when the some or all of the computer programs or instructions are executed, implement a function in the method according to any one of the foregoing aspects and the possible implementations of the foregoing aspects.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include a chip and another discrete device.

According to an eighth aspect, a computer-readable storage medium is provided, and is configured to store a computer program. The computer program includes instructions for implementing a function in any one of the aspects and the possible implementations of the aspects.

Alternatively, a computer-readable storage medium is provided, and is configured to store a computer program. When the computer program is executed by a computer, the computer may be enabled to perform the method according to any one of the foregoing aspects and the possible implementations of the foregoing aspects.

According to a ninth aspect, a computer program product is provided. The computer program product includes computer program code. When the computer program code is run on a computer, the computer is enabled to perform the method according to any one of the foregoing aspects and the possible implementations of the foregoing aspects.

According to a tenth aspect, a communication system is provided. The communication system includes a session management device that performs the method according to any one of the first aspect and the possible implementations of the first aspect and a mobility management device that performs the method according to any one of the second aspect and the possible implementations of the second aspect, or includes a session management device that performs the method according to any one of the third aspect and the possible implementations of the third aspect and a mobility management device that performs the method according to any one of the fourth aspect and the possible implementations of the fourth aspect.

For technical effects of the fifth aspect to the tenth aspect, refer to the descriptions of the first aspect to the fourth aspect. Details are not described again.

### BRIEF DESCRIPTION OF DRAWINGS

FIG. 1 is a diagram of a structure of a communication system that supports access traffic steering, switching, and splitting characteristics according to an embodiment of this application;
FIG. 2 is a diagram of a registration procedure in an untrusted non-3GPP access technology in a conventional technology;
FIG. 3a and FIG. 3b are a schematic flowchart of establishing a multi-access PDU session in a conventional technology;
FIG. 4, FIG. 5, FIG. 6, FIG. 7, and FIG. 8 are diagrams of structures of communication systems to which a communication method is applicable according to embodiments of this application;
FIG. 9 is a schematic flowchart of a communication method according to an embodiment of this application;
FIG. 10a and FIG. 10b are a schematic flowchart of establishing a multi-access PDU session according to an embodiment of this application;
FIG. 11 is a diagram of a registration procedure in an untrusted non-3GPP access type according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

Technical solutions in embodiments of this application may be applied to various communication systems such as a satellite communication system and a conventional mobile communication system. The satellite communication system may be integrated with the conventional mobile communication system (that is, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, or another future communication system. The communication system further supports a communication system integrating multiple wireless technologies, for example, may be further used in a system that integrates a non-terrestrial network (non-terrestrial network, NTN) and a terrestrial mobile communication network, for example, an uncrewed aerial vehicle, a satellite communication system, or high altitude platform station (high altitude platform station, HAPS) communication.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, as a new service scenario emerges, the technical solutions provided in embodiments of this application are also applicable to a similar technical problem.

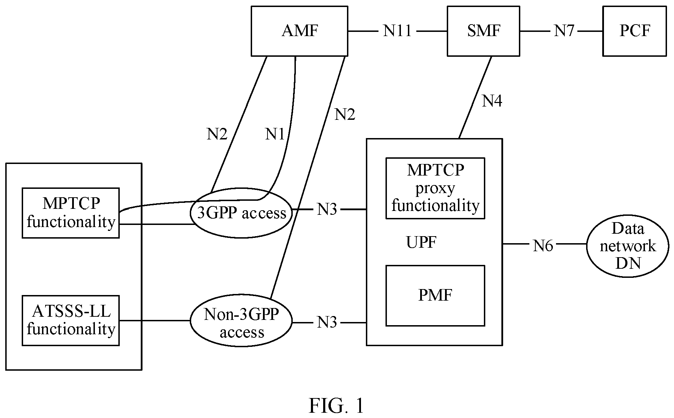

FIG. 1 is a diagram of an architecture of an existing communication system that supports access traffic steering, switching, and splitting (access traffic steering switching splitting, ATSSS) characteristics.

User equipment (user equipment, UE) and a user plane function (user plane function, UPF) network element may establish a multi-access protocol data unit (protocol data unit, PDU) session (multi-access PDU Session, MAPDU Session) for transmission of to-be-sent traffic flow data via a third generation partnership project (third generation partnership project, 3GPP) access network (which may alternatively be understood as a 3GPP access path) and/or a non-3GPP access network (which may alternatively be understood as a non-3GPP access path), to improve transmission efficiency.

For ease of understanding embodiments of this application, the following describes some terms in embodiments of this application, to help a person skilled in the art have a better understanding.

### (1) Descriptions of related network elements

A terminal device is also referred to as the user equipment (user equipment, UE), a mobile station (mobile station, MS), a mobile terminal (mobile terminal, MT), a terminal, or the like, and is a device that provides voice and/or data connectivity for a user. For example, the terminal device includes a handheld device, a vehicle-mounted device, a shipborne device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal (for example, a sensor) in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a wireless terminal that has a vehicle-to-vehicle (Vehicle-to-Vehicle, V2V), vehicle to everything (vehicle to everything, V2X), or long term evolution vehicle (long term evolution vehicle) LTE-V function, or the like. The terminal device may alternatively be a subscriber unit (subscriber unit), a cellular phone (cellular phone), a smartphone (smartphone), a wireless data card, a personal digital assistant (personal digital assistant, PDA) computer, a wireless modem (modem), a handheld device (handset), a laptop computer (laptop computer), a machine type communication (machine type communication, MTC) terminal, or the like. As for the terminal itself, the terminal may include a terminal that supports user plane secure communication ((secure user plane location, SUPL) enabled terminal, SET).

An access management device (which may also be referred to as a mobility management device, a mobility management network element, or an access management network element) is a control plane network element provided by an operator network, and is responsible for access control and mobility management for accessing the operator network by the terminal device, for example, including mobility state management, assignment of a temporary user identifier, user authentication, and the like. In a 5G communication system, the access management network element may be an access and mobility management function (access and mobility management function, AMF) network element. In a future communication system, the access management network element may still be an AMF network element, or may have another name. This is not limited in this application.

A session management device (which may also be referred to as a session management network element) is mainly responsible for session management in a mobile network, such as session establishment, session modification, session release, user plane activation, user plane deactivation, and the like. Specific functions are, for example, assigning an IP address to the user, and selecting a user plane network element that provides a packet forwarding function. In the 5G communication system, the session management network element may be a session management function (session management function, SMF) network element. In the future communication system, the session management network element may still be an SMF network element, or may have another name. This is not limited in this application.

A user plane device (which may also be referred to as a user plane network element) is responsible for forwarding and receiving user data in a terminal device. The user plane network element may receive user data from a data network, and transmit the user data to the terminal device via an access network device, and the user plane network element may further receive user data from the terminal device via the access network device, and forward the user data to the data network. A transmission resource and a scheduling function in the user plane network element that provide a service for the terminal device are managed and controlled by the SMF network element. In the 5G communication system, the user plane network element may be a user plane function (user plane function, UPF) network element. In the future communication system, the user plane network element may still be a UPF network element, or may have another name. This is not limited in this application.

A data management network element is configured for generation of authentication credentials, user identification handling (for example, storage and management of permanent user identifiers), access control, subscription data management, and the like. In the 5G communication system, the data management network element may be a unified data management (unified data management, UDM) network element. In the future communication system, the unified data management may still be a UDM network element, or may have another name. This is not limited in this application.

A policy control device (which may also be referred to as a policy control network element) mainly supports providing a unified policy framework to govern network behavior, and providing policy rules for a control layer network function, and is responsible for accessing user subscription information relevant for policy decisions. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

The data network (data network, DN) may be deployed with multiple services, and may provide the terminal device with services such as a data service and/or a voice service. For example, the DN is a private network of a smart factory, a sensor installed in a workshop of the smart factory may be a terminal device, the sensor and a control server are deployed in the DN, and the control server may provide a service for the sensor. The sensor may communicate with the control server to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like on the internal office network of the company.

In addition, a "network element" in this application may be referred to as a "device", an "entity", or the like.

### (2) Access type and access technology

A 3GPP access network means that an access type of an access network is a 3GPP access type (the access type may also be referred to as an access manner). The 3GPP access type includes but is not limited to the following access technology: an LTE access technology (corresponding to a 4G cellular network), an NR access technology (corresponding to a 5G cellular network), a 3GPP-defined satellite access technology, or a subsequently evolved cellular access technology. The 3GPP-defined satellite access technology may be further classified into the following technologies: low-earth orbit satellite, medium-earth orbit satellite, and synchronous satellite.

A non-3GPP access network means that an access type of an access network is a non-3GPP access type. The non-3GPP access type includes but is not limited to the following access technology: an untrusted non-3GPP access (untrusted non-3GPP access) technology (for example, accessing a core network via a radio access node purchased by an individual), a trusted non-3GPP access (trusted non-3GPP access) technology (for example, accessing the core network via a radio access node deployed by an operator), a wireline access (wireline access) technology, an IEEE802.11 (Wi-Fi) access technology, a non-3GPP access technology in which a connection is performed via an SNPN, a wireline-BBF access technology, a wireline-cable access technology, or the like. Specifically, the non-3GPP access type may be or may include an access technology like a wireline, Wi-Fi, Bluetooth, or ZigBee.

(3) A difference between a multi-access PDU session and a single access PDU session (single access PDU Session) includes the following. In the single access session, a user plane channel sends data via only one access network device (which may be a 3GPP access network device or a non-3GPP access network device), for example, the UE may send uplink data to the UPF via a radio access network (radio access network, RAN), and the UPF may send downlink data to the UE via the RAN. However, in the current multi-access PDU session, a user plane channel may include two access network devices (a 3GPP access network device and a non-3GPP access network device) which are connected to a same UPF (or connected to a same UPF via another UPF). For example, the UE may send uplink data to the UPF via a RAN and/or a non-3GPP interworking function (non-3GPP interworking function, N3IWF), and the UPF sends downlink data to the UE via the RAN and/or the N3IWF.

(4) In the multi-access PDU session, whether to-be-sent data is transmitted through a 3GPP access network path, a non-3GPP access network path, or both the 3GPP access network path and the non-3GPP access network path is based on a steering mode.

The steering mode includes but is not limited to an active-standby (Active-Standby) mode, a smallest delay (Smallest Delay) mode, a load-balancing (Load-Balancing) mode, or a priority-based (Priority-based) mode. The following describes a mechanism of each of the steering modes.

Active-Standby: In the case of two transmission paths, one transmission path is specified to be active (3GPP access or non-3GPP access), and the other transmission path is standby. In the case that the active transmission path is available, all data of a traffic flow is transmitted to a peer end through the active transmission path; in the case that the active path is unavailable, all data of the traffic flow is switched to the standby transmission path for transmission. In the case of more than two transmission paths, priorities may be assigned to the paths, a transmission path with a highest priority is used for data transmission when the transmission path with the highest priority is available, and a path with a second highest priority in the remaining paths is selected for data transmission (or any one of the remaining paths is selected for data transmission) when the transmission path with the highest priority is unavailable.

Smallest Delay: A transmission path with a shortest delay is selected for traffic flow data transmission. In this mode, the UE or the UPF needs to monitor a transmission delay of the path in real time. This may be performed by a transport layer protocol (for example, a multi-path transmission control protocol (multi-path transmission control protocol, MPTCP) layer has a round-trip time (round-trip time, RTT) detection function), or by a performance measurement function (performance measurement function, PMF) module in the UPF.

Load-Balancing: Traffic flow data is proportionally distributed to different transmission paths for transmission. The distribution proportion is based on load of multiple (two or more) transmission paths on a network (for example, a smaller distribution proportion of data is distributed to a path with heavier load, and a larger distribution proportion of data is distributed to a path with lighter load).

Priority-based: One transmission path is specified as a transmission path with a highest priority, and another transmission path is a transmission path with a second highest priority (or referred to as a medium priority, a low priority, or the like). When the transmission path with the highest priority is congestion-free, all of the traffic flow data is transmitted through the transmission path with the highest priority. When congestion occurs on the transmission path with the highest priority, some of the traffic flow data is transmitted through the transmission path with the second highest priority (or referred to as the medium priority, the low priority, or the like) or any one or more of remaining paths. When the transmission path with the highest priority is unavailable, all of the traffic flow data is transmitted through the transmission path with the second highest priority (or referred to as the medium priority, the low priority, or the like) or any one or more of remaining paths.

### (5) Process of determining the access type and the access technology

First, when performing a registration procedure, the UE sends an access network (access network, AN) message to the access network device.

The access network device may be a 3GPP access network device (for example, a RAN) or a non-3GPP access network device. For example, the non-3GPP access network device includes a non-3GPP interworking function (non-3GPP interworking function, N3IWF) network element, a trusted non-3GPP gateway function (trusted non-3GPP gateway function, TNGF) network element, a trusted WLAN interworking function (trusted WLAN interworking function, TWIF) network element, or a wireline access gateway function (wireline access gateway function, W-AGF) network element, where the W-AGF may also be referred to as an AGF.

The AN message includes an AN parameter and a registration request message. The registration request message may include a registration type and a terminal identifier. The terminal identifier may include but is not limited to a subscription concealed identifier (subscription concealed identifier, SUCI), a 5G globally unique temporary identity (5G globally unique temporary identity, 5G-GUTI), and/or the like. The registration type may be initial registration, a mobility registration update, emergency registration, or the like.

After receiving the AN message, the access network device may perform AMF selection.

For example, the access network device performs the AMF selection based on the AN parameter in the AN message, for example, performs the AMF selection based on a globally unique AMF identifier (globally unique AMF identifier, GUAMI) or a 5G system temporary mobile subscriber identity (5G S-temporary mobile subscriber identity, 5G-S-TMSI) in the AN parameter.

Next, the access network device sends the registration request message to the AMF. After receiving the registration request message, the AMF may determine an access type and an access technology that are used by the UE to register with a core network.

In an example, the AMF determines, based on the access network device, the access type used by the UE. For example, if the registration request message is sent or forwarded by the 3GPP access network device (for example, the RAN), the AMF may determine that the access type used by the UE is a 3GPP access type. For another example, if the registration request message is sent or forwarded by the non-3GPP access network device, for example, sent by the N3IWF, the TNGF, the TWIF, or the W-AGF, the AMF may determine that the access type used by the UE is a non-3GPP access type.

In another example, the AMF may further determine the access technology used by the UE.

For example, for the 3GPP access type, the AMF may further determine, based on RAN information, that the access technology is LTE-M, NR, NR in unlicensed spectrum, satellite access, or the like. For example, the RAN information includes but is not limited to a global radio access network node identifier (Global RAN Node ID) associated with an N2 interface, a tracking area (tracking area) indicated by a radio access network device, and the like.

For example, for the non-3GPP access type, the AMF may further determine the access technology based on a 5G access network node associated with the N2 interface.

When the 5G access network node has a global N3IWF node identifier (Global N3IWF Node ID), the access technology is an untrusted non-3GPP access technology.

When the 5G access network node has a global TNGF node identifier (Global TNGF Node ID) and/or a global TWIF node identifier (Global TWIF Node ID), the access technology is a trusted non-3GPP access technology.

When the 5G access network node has a global W-AGF node identifier (Global W-AGF ID), the access technology is a wireline (Wireline) access technology. Further, if a W-AGF corresponding to the W-AGF node identifier supports a wireline broadband forum access network (Wireline BBF Access Network), the access technology is a wireline-BBF. If a W-AGF corresponding to the W-AGF node identifier supports a wireline access network (Wireline Cable Access Network), the access technology is a wireline-cable. If the wireline-BBF or the wireline-cable cannot be distinguished, the access technology is a wireline.

For example, for the non-3GPP access type, the AMF may further determine a more refined access technology based on user location information (User Location Information). The more refined access technology includes IEEE 802.11 access (that is, a wireless local area network WLAN or Wi-Fi), wireline-cable access, or wireline-BBF access.

After one or more times of registration, there may be one or more access types used by the UE to register with the core network, and there may be one or more access technologies used by the UE to register with the core network.

### (6) Policy and charging control rule (policy and charging control rule, PCC rule)

The PCC rule is generated by the policy control function (policy control function, PCF), and mainly relates to some policy information and charging information. The PCF sends the PCC rule to the SMF after generating the PCC rule. The SMF may further generate another rule based on the information in the PCC rule. For example, the SMF may generate an ATSSS rule (described subsequently) and an N4 rule (described subsequently) based on the information in the PCC rule, and respectively send the ATSSS rule and the N4 rule to the UE and the UPF. The PCC rule may include multi-access session control information (Multi-Access PDU (MAPDU) Session Control information). The information allows the PCF to control one or more of the following: the steering mode, steering functionality, a steering mode indicator, a threshold value, the charging information, and usage monitoring information.

The steering mode is, for example, Active-Standby, Smallest Delay, Load-Balancing, or Priority-based.

The steering functionality may be understood as functionality used to perform multi-path steering. For example, MPTCP functionality or ATSSS-Lower Layer functionality is steering functionality defined in 3GPP.

The steering mode indicator (steering mode indicator) may be autonomous load-balance or UE-assistance. The former is that the UE or the UPF may autonomously determine a steering proportion when the steering mode is load-balancing. The latter is that the UE may autonomously determine a steering proportion when the steering mode is load-balancing. In addition, the UE may further send the steering proportion to the UPF, so that the UPF sends downlink data based on the steering proportion.

The threshold value includes but is not limited to a round-trip time RTT threshold value and/or a packet loss rate threshold value, and may be used in combination with the load-balancing or priority-based steering mode, to assist in deciding how to perform steering.

The charging information (Charging information) depends on an access type of a path in which transmission of the traffic flow is performed.

The usage monitoring information (Usage Monitoring information) depends on an access type of a path in which transmission of the traffic flow is performed.

In addition, the MA PDU session control information may further include application descriptors, to identify the traffic flow, to determine steering functionality and a steering mode that should be used for the traffic flow.

### (7) ATSSS rule

The SMF generates the ATSSS rule according to the PCC rule, and sends the ATSSS rule to the UE via the AMF. The ATSSS rule may include one or more of the following:
a rule identifier (Rule identifier), uniquely identifying the ATSSS rule;
a rule precedence (Rule Precedence), used to determine a sequence of ATSSS rules;
a traffic descriptor (Traffic Descriptor), used to define a traffic flow, where the traffic descriptor may include one or more pieces of the following information: an application descriptor (application descriptor), an IP descriptor (IP descriptor), and a non-IP descriptor (non-IP descriptor), where the application descriptor (Application descriptor) includes one or more application identifiers, to identify an application that produces the traffic flow, the IP descriptor (IP descriptor) includes one or more quintuplets, to identify a destination of an IP traffic flow, and the non-IP descriptor (Non-IP descriptor) includes one or more descriptors, to identify a destination of a non-IP traffic flow like an Ethernet data packet; and
an access selection descriptor (Access Selection Descriptor), used to define an access selection part, where the access selection descriptor may include the following information: the steering mode, the steering mode indicator, the threshold value, and the steering functionality.

### (8) N4 rule

The N4 rule is sent by the SMF to the UPF, to control a function of the UPF and enable the UPF to report some event information to the SMF. The N4 rule may include one or more of the following rules:
a packet detection rule (packet detection rule, PDR), including information used to classify data packets arriving at the UPF;
a forwarding action rule (forwarding action rule, FAR), including information indicating whether to forward, discard, or cache a traffic flow identified according to the PDR;
a multi-access rule (multi-access rule, MAR), including information indicating how to process steering, switching, or splitting in an MA PDU session, where the rule is used only in the MA PDU session, and is related to the multi-access session in the present invention;
a usage reporting rule (usage reporting rule, URR), including information used to define how to collect statistics on the traffic flow identified according to the PDR and how to report measurement;
a quality of service enforcement rule (QoS enforcement rule, QER), including information related to QoS enforcement of the traffic flow identified according to the PDR; and
a session reporting rule (session reporting rule, SRR), including information about an event that a user plane function is requested to detect and report, where the event is not related to a specific PDR in a PDU session or related to usage measurement.

(9) The registration procedure includes but is not limited to a registration procedure in the 3GPP access type, a registration procedure in the untrusted non-3GPP access technology, a registration procedure in the trusted non-3GPP access technology, or a registration procedure in the wireline access technology.

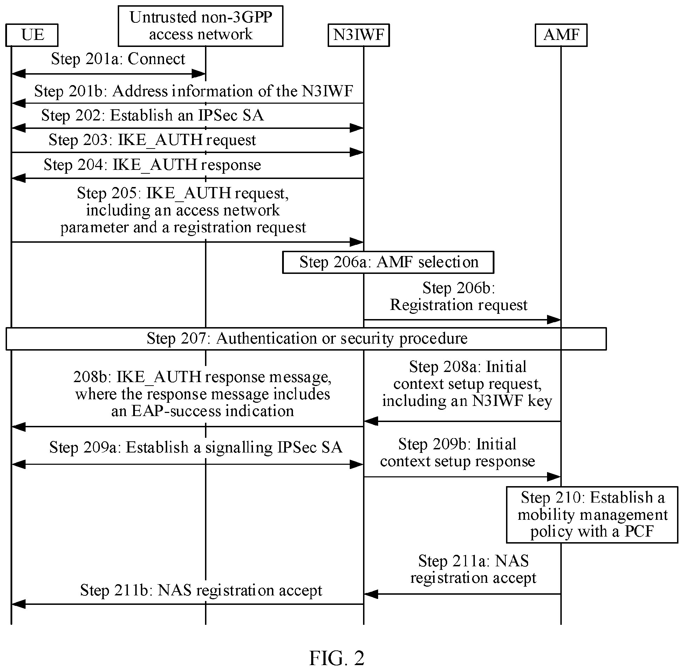

As shown in FIG. 2, a possible registration procedure in the untrusted non-3GPP access technology in a conventional technology is described.

Step 201a: UE is connected to an untrusted non-3GPP access network, and is assigned one IP address.

The untrusted non-3GPP access network herein is usually an access network deployed by a non-operator, and may include devices such as an access point (access point, AP), a router, a switch, and a gateway. Subsequently, the UE may communicate with an N3IWF via the untrusted non-3GPP access network.

Step 201b: The UE selects the N3IWF, and obtains address information of the N3IWF.

Step 202: The UE establishes an internet protocol security (internet protocol security, IPsec) security association (security association, SA) with the N3IWF.

For example, the UE establishes the IPsec SA with the N3IWF by initiating an internet key exchange (internet key exchange, IKE) initial exchange.

Step 203: The UE sends a terminal device identifier (UE ID) to the N3IWF selected in step 201b.

For example, the UE sends a request message to the N3IWF. The request message includes the terminal device identifier (UE ID). It should be noted that the request message does not include an AUTH payload (payload). This indicates that the request message is used to exchange extensible authentication protocol (extensible authentication protocol, EAP) signalling. In a possible implementation, the request message is a key exchange authentication IKE_AUTH request message.

Step 204: The N3IWF sends an extensible authentication protocol request (EAP Request) data packet to the UE.

For example, the N3IWF sends a response message to the UE, where the response message includes the extensible authentication protocol request (EAP Request) data packet. In a possible implementation, the response message is a key exchange authentication IKE_AUTH response message.

The EAP Request data packet may include a 5G-start (5G-Start) data packet. The EAP-Request data packet (for example, the 5G-Start data packet) is used to notify the UE to initiate an EAP-5G session, or it may be understood as that the EAP-Request data packet (for example, the 5G-Start data packet) is used to notify the UE to start to send a non-access stratum (non-access stratum, NAS) message. When the UE sends the NAS message, the NAS message is usually encapsulated in an EAP-5G data packet.

Step 205: The UE sends an extensible authentication protocol response (EAP-Response) data packet to the N3IWF.

For example, the UE sends a request message to the N3IWF, where the request message includes the extensible authentication protocol response (EAP-Response) data packet. In a possible implementation, the request message is a key exchange authentication (IKE_AUTH) request message.

The EAP-Response data packet may include a 5G-NAS data packet, and the 5G-NAS data packet may include an access network (AN) parameter and a registration request message. The AN parameter includes parameter information used by the N3IWF to select an AMF. The parameter information may include one or more of the following: a globally unique AMF identifier (globally unique AMF identifier, GUAMI), a public land mobile network (public land mobile network, PLMN ID), a network identifier (NID), and the like. The registration request message is included in a non-access stratum PDU (NAS-PDU).

Step 206a: The N3IWF may perform AMF selection based on the AN parameter received in step 205.

Step 206b: The N3IWF sends the registration request message received in step 205 to the AMF selected in step 206a.

Step 207: The UE, the AMF, an SMF, an authentication server function (authentication server function, AUSF), a UDM, and the like perform an authentication and security procedure.

For example, first, the AMF selects the AUSF, and sends an authentication request message to the AUSF. The AUSF performs an authentication procedure on the UE, and obtains authentication data or information used for authentication from the UDM. All authentication-related data packets are encapsulated by using a NAS message. For example, the NAS message may be encapsulated by using a data packet of a 5G-NAS type in an EAP. After the authentication is complete, the AUSF sends a security anchor functionality (security anchor functionality, SEAF) key to the AMF. The AMF may obtain a NAS security key and an N3IWF key through derivation based on the SEAF key. The N3IWF key is used by the UE and the N3IWF to establish the IPsec SA.

Then, the AMF indicates, to the UE, that the authentication succeeds. For example, the AMF sends a NAS security mode command (NAS Security Mode Command) to the UE, to activate NAS security. The NAS Security Mode Command includes an EAP-success (EAP-Success) indication, indicating that EAP-authentication and key agreement (EAP-authentication and key agreement, EAP-AKA') authentication performed by a core network succeeds. The N3IWF forwards, to the UE, the NAS Security Mode Command sent by the AMF, and sends, to the AMF, a NAS security mode complete (NAS Security Mode Complete) message sent by the UE.

Step 208a: The AMF sends the N3IWF key to the N3IWF.

For example, the AMF sends a request message to the N3IWF, where the request message includes the N3IWF key. For example, the request message is an initial context setup request (Initial Context Setup Request) message or a next generation application protocol (next generation application protocol, NGAP) initial context setup request (Initial Context Setup Request) message. The AMF sends the N3IWF key to the N3IWF only after receiving the NAS Security Mode Complete message from the UE.

Step 208b: The N3IWF sends an EAP-Success to the UE, indicating that authentication performed by the N3IWF on the UE succeeds, indicating that IPsec tunnel authentication succeeds, or indicating that the N3IWF and the UE complete the EAP-5G session.

For example, the N3IWF sends a response message (for example, an IKE_AUTH response message) to the UE, where the response message includes the EAP-Success.

In this case, the EAP-5G session is complete, and no EAP-5G data packet is exchanged subsequently.

Step 209a: The UE and the N3IWF establish the IPsec SA by using the previously obtained N3IWF key, where the IPsec SA is referred to as "signalling IPsec SA (signalling IPsec SA)".

In this case, the signalling IPsec SA is configured to be run in a tunnel mode, and the N3IWF assigns one "inner" IP address and NAS_IP_ADDRESS to the UE. All subsequent NAS messages are transmitted via the signalling IPsec SA. For an uplink NAS message sent by the UE to the AMF, a source address is the "inner" IP address of the UE, and a destination address is NAS_IP_ADDRESS. For a downlink NAS message sent by the AMF to the UE, a source address is NAS_IP_ADDRESS, and a destination address is the "inner" IP address of the UE.

It should be noted that, in step 203, the IKE_AUTH request message sent by the UE to the N3IWF through the IPsec SA does not include the AUTH payload (payload). However, in step 209a, an IKE_AUTH request message sent by the UE to the N3IWF through the signalling IPsec SA (signalling IPsec SA) may include an AUTH payload (payload).

Step 209b: After establishing the signalling IPsec SA, the N3IWF notifies the AMF that a UE context has been created. For example, the N3IWF notifies, by using an initial context setup response or a next generation application protocol initial context setup response (NGAP Initial Context Setup Response) message, the AMF that the UE context has been created.

Optionally, step 210: The AMF may establish a mobility management policy (AM Policy Association Establishment) with a PCF.

Step 211a: The AMF sends a NAS registration accept (NAS Registration Accept) message to the N3IWF.

The NAS registration accept message may be included in an N2 message.

Subsequently, when the AMF registers with the UDM, the AMF needs to provide the UDM with an access type of non-3GPP access.

Step 211b: The N3IWF sends the NAS registration accept message to the UE through the signalling IPsec SA established in step 209a.

(10) MA PDU session establishment procedure

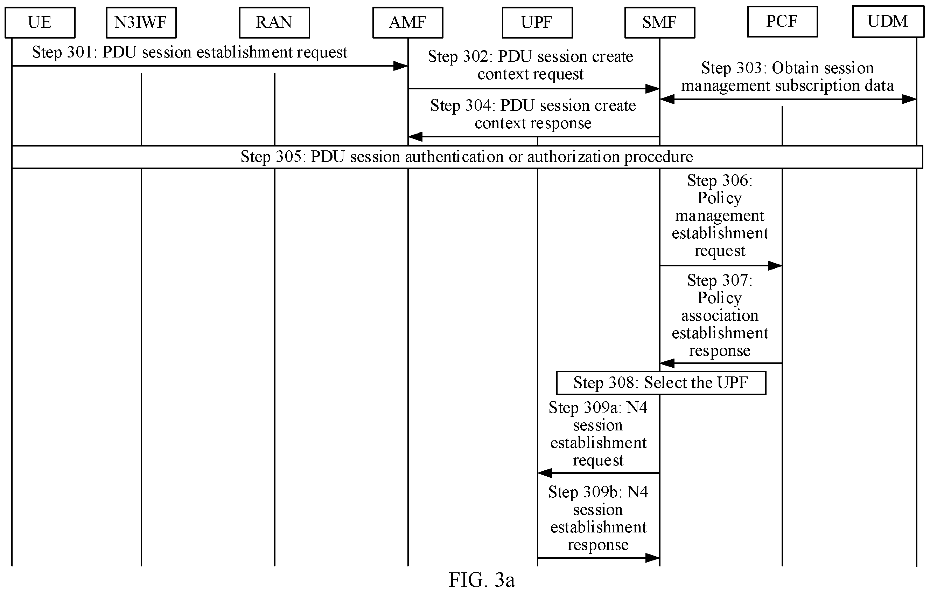

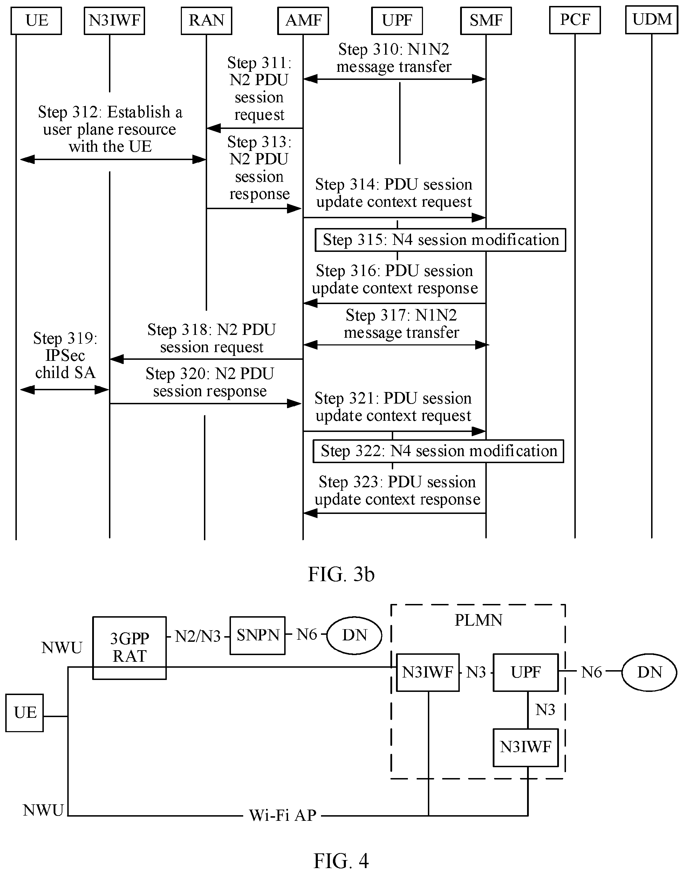

As shown in FIG. 3a and FIG. 3b, a possible MAPDU session establishment procedure in a conventional technology is described. This example is applicable to a scenario in which one path in a multi-access PDU session established by UE is a path of a 3GPP access type, and another path is a path of a non-3GPP access type. It may be understood that FIG. 3a and FIG. 3b may be considered as an overall procedure, and are divided into two parts only for ease of drawing.

Step 301: The UE sends, to an AMF, one or more of the following: a request type (request type), ATSSS capabilities (Capabilities) information, a PDU session identifier (PDU Session ID), a data network name requested by the UE (UE Requested DNN), slice information (S-NSSAI), and the like. The request type is a multi-access session request (MA PDU Request), indicating that a session establishment request message is used to request to establish the multi-access PDU session. The ATSSS Capabilities are used to notify a network of steering functionality supported by the UE, for example, an MPTCP and/or an ATSSS-LL.

For example, the UE sends a NAS message to the AMF, including the foregoing pieces of information. The NAS message is, for example, a PDU session establishment request (PDU Session Establishment Request) message.

Step 302: The AMF sends, to an SMF, one or more of the following: a UE identifier (for example, a subscription permanent identifier (subscription permanent identifier, SUPI)), the UE requested DNN, the PDU Session ID, the MA PDU Request, an access type (access type), a radio access technology type (radio access technology type, RAT type), and the like. The access type is an access type used by the UE to register with a core network, for example, the 3GPP access type and the non-3GPP access type. The radio access technology type may include a radio access technology, or may include a wireline access technology. The foregoing has described an access technology that may correspond to the 3GPP access type and an access technology that may correspond to the non-3GPP access type. Details are not described again.

For example, the AMF sends a PDU session create session context request (Nsmf_PDU Session_CreateSMContext Request) message to the SMF, including the foregoing pieces of information.

Optionally, step 303: The SMF obtains session management subscription data from a UDM, where the subscription data may include information indicating that the establishment of the multi-access PDU session is allowed or information indicating that the establishment of the multi-access PDU session is not allowed. For example, the session management subscription data may be obtained in a subscription retrieval or subscription for updates (Subscription retrieval/subscription for updates) manner.

Step 304: The SMF sends, to the AMF, one or more of the following: a session context identifier and a cause (cause).

For example, the SMF sends a PDU session create session context response (Nsmf_PDU Session_CreateSMContext Response) message to the AMF, including the foregoing pieces of information.

Optionally, step 305: Perform a PDU session authentication or authorization procedure.

Step 306: The SMF sends, to a PCF, one or more of the following: the UE identifier (for example, the subscription permanent identifier (subscription permanent identifier, SUPI)), the UE requested DNN, the PDU Session ID, the MA PDU Request, the radio access technology type (radio access technology type, RAT type), and the like.

If a dynamic policy control and charging (policy control and charging, PCC) rule is needed, the SMF selects the PCF, and the SMF sends the pieces of information to the PCF, to establish a session policy association with the PCF.

For example, the SMF sends a policy association establishment request (SM Policy association establishment request) message to the PCF, including the foregoing pieces of information.

Step 307: The PCF sends the policy control and charging PCC rule and the like to the SMF. The PCC rule includes multi-access PDU session control information. The multi-access PDU session control information includes but is not limited to one or more of the following: a steering mode (steering mode), steering functionality (steering functionality), a threshold value, and the like.

For example, the PCF sends a policy association establishment response (SM Policy Association Establishment Response) message to the SMF, including the foregoing pieces of information.

Step 308: The SMF selects an appropriate UPF.

Step 309a: The SMF sends an N4 rule to the UPF selected in step 308, where the N4 rule includes but is not limited to one or more of the following: a packet detection rule (packet detection rule, PDR), a forwarding action rule (forwarding action rule, FAR), a multi-access rule (multi-access rule, MAR), and other rules. The MAR rule includes but is not limited to one or more of the following: the steering mode, the steering functionality, and other information.

For example, the SMF sends an N4 session establishment request (N4 Session Establishment Request) message to the UPF, including the foregoing pieces of information.

Step 309b: The UPF sends tunnel information, for example, tunnel information on a core network side (CN tunnels info), to the SMF.

For example, the UPF sends an N4 session establishment response (N4 Session Establishment Response) message to the SMF, including the foregoing pieces of information.

Through step 309a and step 309b, the SMF establishes an N4 connection to the UPF selected in step 308.

Step 310: The SMF sends, to the AMF, one or more of the following: N2 interface session management information (N2 SM information), an N1 interface session management container (N1 SM container), the access type, and other information.

The N2 SM information includes but is not limited to one or more of the following: the PDU session identifier (PDU Session ID) (reported by the UE in step 301), the tunnel information on the core network side (CN Tunnel Info) (a piece of CN Tunnel Info from step 309b), and the like.

The N1 SM container includes but is not limited to one or more of the following: a PDU session establishment accept (PDU Session Establishment Accept) message (which may be considered as a reply/response to the PDU session establishment request in step 301), an ATSSS rule (rule), and other session-related information. The ATSSS rule includes but is not limited to one or more of the following: the steering mode, the steering functionality, the threshold value, and other information. Subsequently, the information in the N1 SM container is sent by the SMF to the UE via the AMF. For example, the AMF sends the information to the UE by using a NAS message.

For example, the SMF sends an N1N2 message transfer (Namf_Communication_N1N2MessageTransfer) message to the AMF, including the foregoing pieces of information.

The AMF device may further send a response to the SMF device, to indicate that the information from the SMF device is received.

Step 311: The AMF sends the N2 SM information (from step 310) and the NAS message (the NAS message needs to be sent to the UE) to a RAN. The NAS message includes the PDU session identifier (PDU Session ID) (from the N2 SM information in step 310) and the N1 SM container (from step 310).

The AMF may determine, based on the access type indicated by the SMF, whether the pieces of information are sent to a 3GPP access network device or a non-3GPP access network device. For example, when the access type in step 310 is the 3GPP access type, the pieces of information are sent to the RAN.

For example, the AMF sends an N2 PDU session request message to the RAN, including the foregoing pieces of information.

Step 312: The RAN establishes an air interface resource with the UE, and specific resource setup is performed on the access network (AN-specific resource setup), to establish a data radio bearer (data radio bearer, DRB).

The RAN sends the NAS message to the UE. The NAS message includes but is not limited to one or more of the following: the PDU session identifier (PDU Session ID), the PDU session establishment accept (PDU Session Establishment Accept) message, and the ATSSS rule (rule), for example, information such as the steering mode, the steering functionality, and the threshold value.

Step 313: The RAN sends access network tunnel information (AN tunnels info) on a RAN side to the AMF, where the access network tunnel information on the RAN side is used to notify the UPF of a destination (which may be understood as a destination address of downlink data after passing through a 3GPP transmission path) to which the downlink data should be sent. The AN tunnels info on the RAN side is subsequently sent to the UPF via the AMF and the SMF. Refer to step 313, step 314, and step 315.

For example, the RAN sends an N2 PDU session response message to the AMF, including the foregoing pieces of information.

Step 314: The AMF sends the access network tunnel information (AN tunnels info) on the RAN side (from step 313) to the SMF.

For example, the AMF sends the N2 PDU session response message to the SMF, where the N2 PDU session response message includes the access network tunnel information (AN tunnels info) on the RAN side. For another example, the AMF sends a PDU session update session context request (Nsmf_PDU Session_UpdateSMContext Request) message to the SMF, where the request message includes the N2 PDU session response message.

Step 315: The SMF sends the access network tunnel information (AN tunnels info) on the RAN side to the UPF.

For example, the SMF sends the access network tunnel information (AN tunnels info) on the RAN side to the UPF through an N4 session modification (N4 Session Modification) procedure.

Step 316: The SMF sends success or failure indication information to the AMF.

For example, the SMF sends a PDU session update session context response (Nsmf_PDU Session_UpdateSMContext Response) message to the AMF, where the response message includes the update success or update failure indication information.

If an update fails, the SMF may further send a failure cause value to the AMF.

Step 317: The SMF sends, to the AMF, one or more of the following: N2 interface session management information (N2 SM information), an N1 interface session management container (N1 SM Container), the access type, and other information.

The N2 SM information includes but is not limited to one or more of the following: the PDU session identifier (PDU Session ID) (reported by the UE in step 301) and tunnel endpoint information on the core network side (CN Tunnel Info).

For example, the SMF sends an N1N2 message transfer (Namf_Communication_N1N2MessageTransfer) message to the AMF, including the foregoing pieces of information.

The AMF device may further send a response to the SMF device, to indicate that the information from the SMF device is received.

Step 318: The AMF sends the N2 SM information (from step 317) to an N3IWF.

The AMF may determine, based on the access type indicated by the SMF, whether the pieces of information are sent to a 3GPP access network device or a non-3GPP access network device. For example, when the access type in step 317 is the non-3GPP access type, the pieces of information are sent to the non-3GPP access gateway device (for example, the N3IWF).

For example, the AMF sends an N2 PDU session request message to the N3IWF, where the request message carries the N2 SM information.

Step 319: The N3IWF establishes, with the UE, an internet protocol security child security association (IPsec child SA) used for transmission of user plane data.

In this process, the N3IWF assigns an IP address (for example, UP_IP_ADDRESS) of the IPsec child SA to the UE. To be specific, when the UE sends uplink data, a destination IP address should be set to UP_IP_ADDRESS, and a source IP address is an "inner" IP address assigned during registration. A quantity of IPsec child SAs established between the UE and the N3IWF and pieces of quality of service flow (QoS Flow) data of which transmission is performed by each IPsec child SA are determined based on a policy and a configuration of the N3IWF.

Step 320: The N3IWF sends access network tunnel information (AN tunnels info) on an N3IWF side to the AMF, where the access network tunnel information on the N3IWF side is used to notify the UPF of a destination (which may be understood as a destination address of downlink data after passing through a non-3GPP transmission path) to which the downlink data should be sent. The access network tunnel information on the N3IWF side is subsequently sent to the UPF via the AMF and the SMF. Refer to step 320, step 321, and step 322.

For example, the N3IWF sends an N2 PDU session response message to the AMF, including the foregoing pieces of information.

Step 321: The AMF sends the access network tunnel information on the N3IWF side (from step 320) to the SMF.

For example, the AMF sends the N2 PDU session response message to the SMF, where the N2 PDU session response message includes the access network tunnel information (AN tunnels info) on the N3IWF side. For another example, the AMF sends a PDU session update session context request (Nsmf_PDU Session_UpdateSMContext Request) message to the SMF, where the request message includes the N2 PDU session response message.

Step 322: The SMF sends the access network tunnel information (AN tunnels info) on the N3IWF side to the UPF.

For example, the SMF sends the AN tunnel information on the N3IWF side to the UPF through an N4 session modification (N4 Session Modification) procedure.

Step 323: The SMF sends success or failure indication information to the AMF.

For example, the SMF sends a PDU session update session context response (Nsmf_PDU Session_UpdateSMContext Response) message to the AMF, where the response message includes the update success or update failure indication information.

If an update fails, the SMF may further send a failure cause value to the AMF.

The example in FIG. 3a and FIG. 3b provides a description that a session establishment procedure is first performed on a 3GPP access side (for example, refer to step 310 to step 316 in FIG. 3b), and then a session establishment procedure is performed on a non-3GPP access side (for example, refer to step 317 to step 323 in FIG. 3b). In another example, alternatively, a session establishment procedure may be first performed on a non-3GPP access side, and then a session establishment procedure may be performed on a 3GPP access side. This process is similar to the foregoing diagram. Details are not described again.

The example in FIG. 3a and FIG. 3b provides a description that the UE sends the session establishment request message once. In another example, the UE may separately send the session establishment request message on the 3GPP side and the non-3GPP side. For example, between step 316 and step 317, a process similar to step 301 and step 302 may be further performed. Details are not described again.

### (11) System architecture of the multi-access PDU session

In the system architecture, paths of the multi-access PDU session include but are not limited to transmission through three or more paths, transmission through multiple paths whose access types are 3GPP, or transmission through multiple paths whose access types are non-3GPP.

FIG. 4 shows a possible system architecture of a multi-access PDU session. In the system architecture, paths of the multi-access PDU session include a path 1 and a path 2. The path 1 may be that UE accesses a public land mobile network PLMN via Wi-Fi. For example, the UE establishes an internet protocol security IPsec tunnel with an N3IWF in the PLMN via a Wi-Fi AP. Two branches in the path 1 correspond to different N3IWFs, and both the two branches may exist, or only one of the branches may exist. The path 2 may be that the UE establishes an IPsec tunnel with an N3IWF in the PLMN via a standalone non-public network (standalone non-public network, SNPN). The path 1 and the path 2 may correspond to a same N3IWF, or may correspond to different N3IWFs. Therefore, from the perspective of the PLMN, the UE accesses the PLMN through two paths whose access types are non-3GPP. In other words, the multi-access PDU session established by the UE includes multiple paths whose access types are non-3GPP.

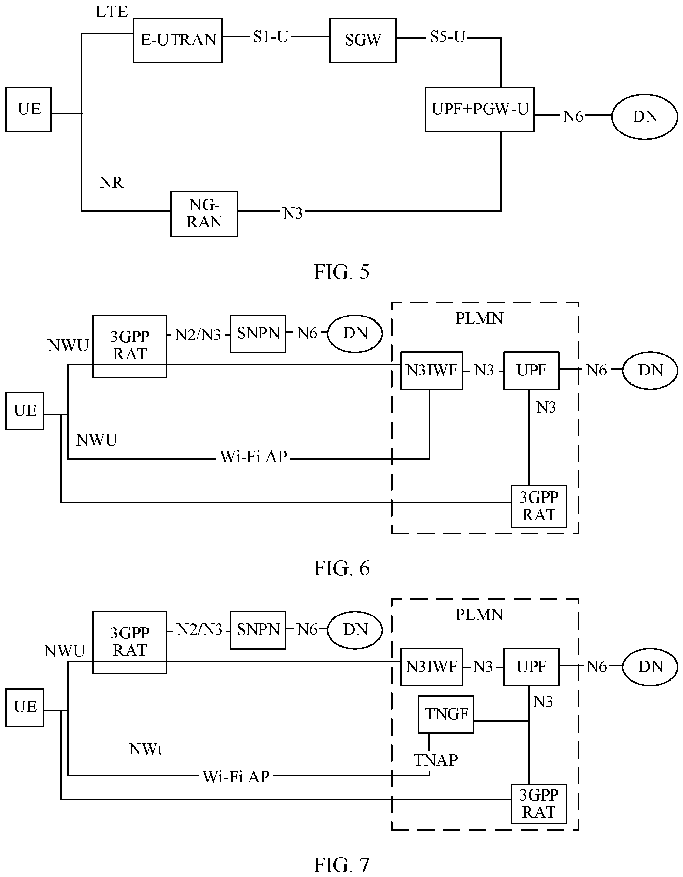

FIG. 5 shows a possible system architecture of a multi-access PDU session. In the system architecture, paths of the multi-access PDU session include a path 1 and a path 2. The path 1 is that UE accesses a public land mobile network PLMN through a 4G air interface (that is, LTE). The path 2 is that the UE accesses the PLMN by using a 5G air interface technology (that is, NR). In the path 1, the UE is connected, via a 4G base station and a 4G serving gateway (serving gateway, SGW), to a device (PGW-U+UPF) that supports both a 4G packet data network gateway-user plane (packet data network gateway-user plane, PGW-U) and a 5G user plane function (UPF). In the path 2, the UE is connected to the PGW-U+UPF via a 5G base station. Therefore, from the perspective of the PLMN, the UE accesses the PLMN through two paths whose access types are 3GPP. In other words, the multi-access PDU session established by the UE includes multiple paths whose access types are 3GPP.

FIG. 6 shows a possible system architecture of a multi-access PDU session. In the system architecture, paths of the multi-access PDU session include a path 1, a path 2, and a path 3. The path 1 is that UE establishes an IPsec tunnel with an N3IWF in a PLMN via a standalone non-public network SNPN. The path 2 is that the UE accesses the public land mobile network PLMN via Wi-Fi. For example, the UE establishes an internet protocol security IPsec tunnel with the N3IWF in the PLMN via a Wi-Fi AP. The path 3 is that the UE accesses the PLMN through an NR air interface of the PLMN. Therefore, from the perspective of the PLMN, the UE accesses the PLMN through two paths whose access types are non-3GPP and one path whose access type is 3GPP. In other words, the multi-access PDU session established by the UE includes three paths.

FIG. 7 shows a possible system architecture of a multi-access PDU session. In the system architecture, paths of the multi-access PDU session include a path 1, a path 2, and a path 3. A difference from FIG. 6 includes that one of non-3GPP paths is a trusted non-3GPP path.

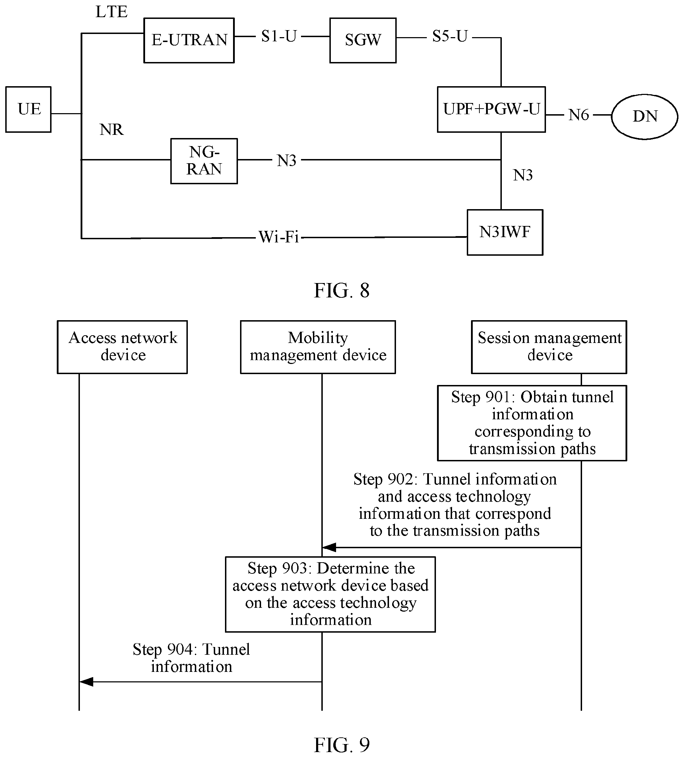

FIG. 8 shows a possible system architecture of a multi-access PDU session. In the system architecture, paths of the multi-access PDU session include a path 1, a path 2, and a path 3. The path 1 is that UE accesses a public land mobile network PLMN through a 4G air interface (that is, LTE). The path 2 is that the UE accesses the PLMN by using a 5G air interface technology (that is, NR). In the path 1, the UE is connected, via a 4G base station and a 4G serving gateway SGW, to a device (PGW-U+UPF) that supports both a 4G packet data network gateway-user plane (PGW-U) and a 5G user plane function (UPF). In the path 2, the UE is connected to the PGW-U+UPF via a 5G base station. In the path 3, the UE establishes an IPsec tunnel with an N3IWF in the PLMN via Wi-Fi, and the N3IWF is connected to the PGW-U+UPF. Therefore, from the perspective of the PLMN, the UE accesses the PLMN through two paths whose access types are 3GPP and one path whose access type is non-3GPP. In other words, the multi-access PDU session established by the UE includes three paths.

Currently, the multi-access PDU session supports transmission through two paths. The two paths are respectively a path whose access type is 3GPP and a path whose access type is non-3GPP. With reference to the system architecture of the multi-access PDU session described above, a future multi-access PDU session supports transmission through multiple paths whose access types are 3GPP and/or multiple paths whose access types are non-3GPP.

In this case, different paths cannot be accurately identified only by using the access type (for example, the 3GPP access type or the non-3GPP access type). For example, the AMF cannot accurately determine, based only on a parameter, which is the access type (Access Type), an access network device with which the UE registers and to which information is sent.

Based on this, this application proposes multiple methods, to accurately identify different paths, so as to implement multi-access session management.

The following describes the solutions in detail with reference to the accompanying drawings. Features or content marked by dashed lines in the accompanying drawings may be understood as optional operations or optional structures in embodiments of this application.

FIG. 9 is a schematic flowchart of a communication method. The communication method is applicable to a multi-access session management process. The session management procedure may include session establishment, a session update, session release, user plane activation, user plane deactivation, and the like.

A multi-access session includes multiple transmission paths. In this embodiment of this application, the transmission path may be a path between a terminal device and an access network device, may be a path between the access network device and a core network device (for example, a user plane device), or may be a path between UE and the core network device (for example, the user plane device).

The plurality of transmission paths include but are not limited to a first transmission path and a second transmission path. An access technology corresponding to the first transmission path is of (which may also be referred to as corresponding to) a 3GPP access type or a non-3GPP access type. An access technology corresponding to the second transmission path is of (which may also be referred to as corresponding to) a 3GPP access type or a non-3GPP access type. In a possible implementation, the access technologies corresponding to the first transmission path and the second transmission path are of (or correspond to) the 3GPP access type; or the access technologies corresponding to the first transmission path and the second transmission path are of (or correspond to) the non-3GPP access type. If one or more other transmission paths are further included, an access technology corresponding to the other transmission path may be of (or correspond to) a 3GPP access type, or may be of (or correspond to) a non-3GPP access type. In other words, in the multiple transmission paths included in the multi-access session, access technologies corresponding to at least two transmission paths may be of a same access type.

The access technologies corresponding to the first transmission path and the second transmission path may be the same or may be different. For example, the access technology corresponding to the first transmission path is an LTE access technology, an NR access technology, an untrusted non-3GPP access technology, a trusted non-3GPP access technology, a wireline access technology, or the like.

The access technology corresponding to the second transmission path is an LTE access technology, an NR access technology, an untrusted non-3GPP access technology, a trusted non-3GPP access technology, a wireline access technology, or the like. If the one or more other transmission paths are further included, the access technology corresponding to the other transmission path may be an LTE access technology, an NR access technology, an untrusted non-3GPP access technology, a trusted non-3GPP access technology, a wireline access technology, or the like.

The untrusted non-3GPP access technology may be further subdivided into: a non-3GPP access technology in which a connection is performed via Wi-Fi, a non-3GPP access technology in which a connection is performed via an SNPN, and the like. In an optional example, in this application, multiple untrusted non-3GPP access technologies may be refined and distinguished, and fourth information may be added to an existing access technology to constitute new access technology information. The fourth information is, for example, an access technology index/identifier with a finer granularity (which may be referred to as an access sub-technology index/identifier), an identifier/index of a path, or IPsec tunnel information. The fourth information indicates (or is used to distinguish or identify) a transmission path (which may alternatively be understood as indicating an N2 interface, an NGAP interface, or a logical channel). Specifically, the fourth information indicates (or is used to distinguish or identify) one of transmission paths corresponding to a same access technology. For example, the non-3GPP access technology in which a connection is performed via Wi-Fi may be referred to as an untrusted non-3GPP access technology 1, or referred to as an untrusted non-3GPP path 1 (untrusted N3GPP path 1), and the non-3GPP access technology in which a connection is performed via an SNPN may be referred to as an untrusted non-3GPP access technology 2, or may be referred to as an untrusted non-3GPP path 2 (untrusted N3GPP path 2), so that more paths of the untrusted non-3GPP access technology are compatible, and signalling overheads can be reduced during transmission of technology information. Similarly, access technologies with a finer granularity included in the LTE access technology, the NR access technology, the trusted non-3GPP access technology, and the wireline access technology may be distinguished, so that more paths of a same access technology type are compatible, and signalling overheads can be reduced during transmission of technology information.

An access network device corresponding to the first transmission path is any one of the following: a 3GPP access network device, a trusted non-3GPP access network device, an untrusted non-3GPP access network device, or a wireline access gateway. An access network device corresponding to the second transmission path is any one of the following: a 3GPP access network device, a trusted non-3GPP access network device, an untrusted non-3GPP access network device, or a wireline access gateway. For example, the 3GPP access network device is any one of the following: an eNodeB, an NG-RAN, or a gNodeB. For example, the trusted non-3GPP access network device is any one of the following: a trusted non-3GPP gateway function TNGF, a trusted WLAN interworking function TWIF, or a trusted non-3GPP access point TNAP. For example, the untrusted non-3GPP access network device is any one of the following: a non-3GPP interworking function N3IWF. For example, the wireline gateway is any one of the following: a wireline access gateway function W-AGF network element.

It may be understood that an access technology corresponding to the transmission path may be an access technology registered by the terminal device, or may be an access technology used when the terminal device registers with a core network. Similarly, an access network device corresponding to the transmission path may be an access network device with which the terminal device registers, may be an access network device connected to the terminal device in the transmission path, or may be an access network device connected to the terminal device when the terminal device accesses the core network.

In an example, if the UE registers with the core network via multiple different access network devices, the UE establishes an MAPDU session via the multiple different access network devices (which may be understood as that multiple access network devices corresponding to multiple transmission paths are different access network devices).

That the multiple access network devices are different may be that the multiple access network devices include access network devices that have a same access type but different access technologies. For example, the multiple access network devices include two or more devices in an eNodeB, an NG-RAN, and a gNodeB; or the multiple access network devices include two or more devices in an N3IWF, a TNGF, a W-AGF, and a TWIF. Certainly, on this basis, access network devices of different access types may be further included.

It may be understood that an existing multi-access session form is compatible in this application. To be specific, the multiple access network devices are two access network devices, where one is an access network device of a 3GPP access type, and the other is an access network device of a non-3GPP access type.

In an example, that the UE is connected to a same access network device in different access manners (the access manner is, for example, the access type or the access technology) may be considered as that the UE establishes an MAPDU session via one access network device (which may be understood as that multiple transmission paths correspond to one access network device). The access network device may be a non-3GPP access network device, for example, an N3IWF. For example, the UE establishes an IPsec tunnel with the N3IWF via Wi-Fi, and registers with the core network via the N3IWF. In addition, the UE establishes another IPsec tunnel with the same N3IWF via the SNPN, and registers with the core network via the N3IWF.

For example, the architecture in FIG. 4 includes two transmission paths, and access types corresponding to the two transmission paths each are a non-3GPP access type. If the path 1 and an option 1 in the path 2 are combined, the two transmission paths correspond to one access network device. If the path 1 and an option 2 in the path 2 are combined, the two transmission paths correspond to different access network devices. An access technology corresponding to the path 1 is the non-3GPP access technology (for example, referred to as the untrusted non-3GPP access technology 1, or referred to as the untrusted non-3GPP path 1) in which a connection is performed via Wi-Fi. An access technology corresponding to the path 2 is the non-3GPP access technology (the untrusted non-3GPP access technology 2, or referred to as the untrusted non-3GPP path 2) in which a connection is performed via an SNPN.

For example, the architecture in FIG. 5 includes two transmission paths, and access types corresponding to the two transmission paths each are a 3GPP access type. The two transmission paths correspond to different access network devices. An access technology corresponding to the path 1 is the LTE access technology. An access technology corresponding to the path 2 is the NR access technology.

For example, the architecture in FIG. 6 includes three transmission paths. Access types corresponding to two of the three transmission paths are a non-3GPP access type. The two non-3GPP transmission paths correspond to a same access network device. Access technologies corresponding to the two non-3GPP transmission paths are respectively the non-3GPP access technology (the untrusted non-3GPP access technology 1, or referred to as the untrusted non-3GPP path 1) in which a connection is performed via Wi-Fi and the non-3GPP access technology (the untrusted non-3GPP access technology 2, or referred to as the untrusted non-3GPP path 2) in which a connection is performed via an SNPN. Another 3GPP transmission path corresponds to another access network device, and a corresponding access technology is the NR access technology.

For example, the architecture in FIG. 8 includes three transmission paths. Access types corresponding to two of the three transmission paths are a 3GPP access type. The two 3GPP transmission paths correspond to a same access network device. Access technologies corresponding to the two 3GPP transmission paths are respectively the LTE access technology and the NR access technology. Another non-3GPP transmission path corresponds to another access network device, and a corresponding access technology is the non-3GPP access technology in which a connection is performed via Wi-Fi.

Step 901: In the multi-access session management process, a session management device (for example, an SMF) obtains tunnel information corresponding to the transmission paths.

In a possible implementation, the multi-access session is a multi-access protocol data unit PDU session.

The tunnel information may indicate a destination address and/or a port number of uplink data. For example, the tunnel information may be tunnel endpoint identifier (tunnel endpoint identifier, TEID) information and/or tunnel address information (for example, an IP address (IP address)). The tunnel information may be tunnel information on a core network side. Each transmission path corresponds to one piece of tunnel information. For example, the first transmission path corresponds to first tunnel information, the second transmission path corresponds to second tunnel information, and a third transmission path corresponds to third tunnel information. The tunnel information is sent to the access network device, to notify the access network device of a destination to which the uplink data should be sent.

That the session management device obtains the tunnel information may be that the session management device assigns the tunnel information corresponding to the transmission paths, or may be that the session management device obtains, from the user plane device (for example, a UPF), the tunnel information corresponding to the transmission paths. Optionally, if the session management device assigns the tunnel information, the session management device may further send the tunnel information to the user plane device.

When obtaining tunnel information corresponding to the multiple transmission paths, the session management device may obtain the tunnel information at a time, or may obtain the tunnel information at multiple times.

Step 902: The session management device (for example, the SMF) sends, to a mobility management device (for example, an AMF), the tunnel information corresponding to the transmission paths and access technology information (for example, an access technology registered by the UE or an access technology used when the UE registers with the core network) corresponding to the transmission paths. The access technology information is used by the mobility management device to determine the access network device (an access network device with which the UE registers, an access network device connected to the UE when the UE registers with the core network, or an access network device connected to the UE in the transmission path).

Correspondingly, the mobility management device (for example, the AMF) receives, from the session management device (for example, the SMF), the tunnel information corresponding to the transmission paths and the access technology information corresponding to the transmission paths.

In an optional example, the session management device sends a transmission message to the mobility management device, and correspondingly, the mobility management device receives the transmission message from the session management device. The transmission message includes the first tunnel information and access technology information that correspond to the first transmission path, and the second tunnel information and access technology information that correspond to the second transmission path. If the one or more other transmission paths are further included, the transmission message may further include tunnel information corresponding to the other transmission path and access technology information corresponding to the other transmission path. In this example, the session management device sends, to the mobility management device via one message, tunnel information and access technology information that correspond to all transmission paths included in the multi-access session. In this way, signalling transmission can be reduced.

In an optional example, the session management device sends a first transmission message to the mobility management device, where the first transmission message includes the first tunnel information and access technology information that correspond to the first transmission path. In addition, the session management device sends a second transmission message to the mobility management device, where the second transmission message includes the second tunnel information and access technology information that correspond to the second transmission path. Correspondingly, the mobility management device receives the first transmission message and the second transmission message from the session management device. If other transmission paths are further included, the session management device may further send, to the mobility management device for each of the other transmission paths, a transmission message including tunnel information and access technology information that correspond to the transmission path. In this example, the session management device sends one transmission message to the mobility management device for each transmission path, so that the mobility management device can learn of a transmission path through which information included in the message to be transmitted, or can learn of a transmission path corresponding to an access network device to which information included in the message to be sent.

In an optional example, when the multiple transmission paths correspond to different access technologies, the session management device sends one transmission message to the mobility management device for each access technology, where the transmission message includes access technology information and corresponding tunnel information. For example, there are three transmission paths in total, and the three transmission paths each correspond to a non-3GPP access type. The first transmission path and the second transmission path in the three paths correspond to the untrusted non-3GPP access technology, and the third transmission path corresponds to the trusted non-3GPP access technology. The session management device may send one transmission message to the mobility management device for the untrusted non-3GPP access technology, where the transmission message includes the first tunnel information corresponding to the first transmission path, the second tunnel information corresponding to the second transmission path, and access technology information (that is, the untrusted non-3GPP access technology). Then, the session management device sends one transmission message to the mobility management device for the trusted non-3GPP access technology, where the transmission message includes the third tunnel information and access technology information (that is, the trusted non-3GPP access technology) of the third transmission path. In this example, the session management device sends one transmission message to the mobility management device for each access technology. In comparison with sending the transmission message in each transmission path, signalling overheads can be reduced.

In a possible implementation, multiple access paths correspond to a same access network device, and the terminal device is connected to the access network device in different access manners. For example, the untrusted non-3GPP access technology may be further subdivided into: the non-3GPP access technology in which a connection is performed via Wi-Fi, the non-3GPP access technology in which a connection is performed via an SNPN, and the like. In this scenario, in this application, the multiple untrusted non-3GPP access technologies may be refined and distinguished, and the fourth information may be added to the existing access technology to constitute the new access technology information. The fourth information is, for example, the access technology index/identifier with the finer granularity (which may be referred to as the sub-access technology index/identifier), an index/identifier of the path, or the IPsec tunnel information. If the existing access technology is not redefined, the session management device may send the access technology information and the fourth information to the mobility management device, where the fourth information indicates one of the multiple transmission paths (which may alternatively be understood as indicating an N2 interface, an NGAP interface, or a logical N2 channel). Specifically, the fourth information indicates (or is used to distinguish/identify) one of the multiple transmission paths corresponding to a same access technology. For example, when the first transmission path and the second transmission path correspond to a same access technology, the indication information may indicate the first transmission path or the second transmission path. In an example, the access technology information and the fourth information are, for example, untrusted non-3GPP access and an index 1 (or an index 2, an index 3, or the like).

The IPsec tunnel information may include but is not limited to one or more pieces of the following information: an IPsec tunnel identifier and IPsec tunnel address information (an inner IP address and/or NAS_IP_ADDRESS).

In a scenario in which the multiple transmission paths correspond to a same access technology and a same access network device, the session management device indicates, via the fourth information, a transmission path used by the mobility management device to send the tunnel information (and the other information), so that the mobility management device can determine an N2 interface, a next generation application protocol NGAP interface, or a logical N2 channel to which the tunnel information (and the other information) is sent. The multi-access session management method is applicable to data transmission of the multi-access session that supports multiple 3GPP paths or multiple non-3GPP paths.

The transmission message described above may be an N1N2 message transfer message.

It should be noted that, in a scenario in which the session management device sends multiple transmission messages to the mobility management device, and the session management device obtains the tunnel information at multiple times, a sequence of obtaining the tunnel information by the session management device and sending the transmission message by the session management device may not be limited. For example, the session management device may send a transmission message once each time the session management device obtains one piece of tunnel information, the session management device may send multiple transmission messages only after obtaining all tunnel information, or the session management device may send a part of transmission messages after obtaining a part of tunnel information, and then send another part of transmission messages only after obtaining another part of tunnel information.

Step 903: The mobility management device determines the access network device based on the access technology information corresponding to the transmission paths.

Before performing a multi-access session establishment process, the UE has performed a registration procedure, and the mobility management device knows an access network device or access network devices connected to the UE, but the mobility management device does not know an access network device to which the tunnel information needs to be sent. Therefore, the mobility management device may determine the corresponding access network device based on the access technology information indicated by the session management device, and then send the tunnel information to the corresponding access network device.

The mobility management device may determine, based on access technology information corresponding to each transmission path, an access network device corresponding to each transmission path. For example, the mobility management device determines a first access network device based on the access technology information corresponding to the first transmission path; the mobility management device determines a second access network device based on the access technology information corresponding to the second transmission path; and the mobility management device determines a third access network device based on the access technology information corresponding to the third transmission path.

In a scenario in which the multiple transmission paths correspond to a same access network device, the first access network device and the second access network device are a same access network device.

Step 904: The mobility management device sends, to the access network device, the tunnel information corresponding to the transmission paths.

The mobility management device sends, to the access network device corresponding to each transmission path, tunnel information corresponding to the transmission path. For example, the mobility management device sends, to the first access network device in the first transmission path, the first tunnel information corresponding to the first transmission path; the mobility management device sends, to the second access network device in the second transmission path, the second tunnel information corresponding to the second transmission path; and the mobility management device sends, to the third access network device in the third transmission path, the third tunnel information corresponding to the third transmission path.

When the first access network device and the second access network device are the same access network device, the UE accesses the access network device for multiple times by using different access technology information. In this case, the mobility management device may send, to the access network device in one message, the tunnel information corresponding to the multiple transmission paths, or may respectively send the tunnel information corresponding to each transmission path.

It should be noted that, in a process in which the mobility management device (for example, the AMF) receives, from the session management device (for example, the SMF), the tunnel information corresponding to the transmission paths, and sends the tunnel information to the access network device, the mobility management device may perform a forwarding function, and does not modify a format of the tunnel information. For example, the tunnel information may be included in N2 SM information, and the mobility management device may forward the N2 SM information. Optionally, the N2 SM information may be included in the N1N2 message transfer message.

In this application, at least two of the multiple transmission paths included in the multi-access session correspond to a same access type (for example, the 3GPP access type or the non-3GPP access type). If a conventional technology is still used, when the session management device sends an access type to the mobility management device, the mobility management device cannot identify a specific access type of an access network device to which the tunnel information (and other information) is to be sent. Therefore, this application proposes that the session management device sends, to the mobility management device, the access technology information which is a finer granularity than the access type, and the mobility management device can accurately identify a corresponding access network device based on the access technology information, that is, accurately identify each transmission path. In this way, the mobility management device may send the tunnel information (and other information) to the corresponding access network device. The multi-access session management method is applicable to the data transmission of the multi-access session that supports the multiple 3GPP paths or the multiple non-3GPP paths.

This application is also applicable to a scenario in which the multiple access network devices include different access network devices that have a same access technology (that is, the first transmission path and the second transmission path correspond to the same access technology but different access network devices). For example, the multiple access network devices include multiple eNodeBs, multiple NG-RANs, multiple gNodeBs, multiple N3IWFs, multiple TNGFs, multiple W-AGFs, or multiple TWIFs. Certainly, on this basis, the multiple access network devices may further include access network devices of different access types.

The access network device corresponding to each transmission path needs to be determined based on the access technology information in this application. In the scenario in which the multiple access network devices include the different access network devices that have the same access technology, the access technology information defined in the conventional technology cannot be used to distinguish between the different access network devices that have the same access technology. In this application, an additional parameter (hereinafter referred to as fifth information) may be used to distinguish between the different access network devices that have the same access technology. In other words, the session management device (for example, the SMF) needs to send the access technology information and the fifth information to the mobility management device (for example, the AMF), where the fifth information indicates (or is used to distinguish/identify) one of the multiple transmission paths (which may alternatively be understood as indicating one of the multiple access network devices). Specifically, the fifth information indicates (or is used to distinguish/identify) one (or an access network device) of the multiple transmission paths corresponding to the same access technology. For example, the fifth information indicates the first transmission path or the second transmission path. The fifth information is, for example, an identifier (the identifier may be any logical identifier provided that the identifier can identify different transmission paths) of the access network device or an identifier of the path. The mobility management device may determine the corresponding access network device with reference to the access technology information and the fifth information.

A correspondence between the access network device and the path may be determined during registration of the UE (the AMF device knows a correspondence between the identifier of the path and the access network device). For example, during the registration of the UE, the different access network devices that have the same access technology are numbered as the path 1, the path 2, and the like. For example, during the registration of the UE via an N3IWF 1, the access technology is the untrusted non-3GPP path 1 (or the untrusted non-3GPP access technology+an identifier of the N3IWF 1). During the registration of the UE via an N3IWF 2, the access technology is the untrusted non-3GPP path 2 (or the untrusted non-3GPP access technology+an identifier of the N3IWF 2). In this way, in the multi-access session management process, after receiving the fifth information, the AMF device may find the corresponding access network device.

In an optional example, the session management device may send the fifth information but not send the access technology information to the mobility management device. The mobility management device may still determine the corresponding access network device based on the fifth information.

In a scenario in which the multiple transmission paths correspond to a same access technology but different access network devices, the session management device indicates, via the fifth information, a transmission path used by the mobility management device to send the tunnel information (and the other information), so that the mobility management device can determine an access network device to which the tunnel information (and the other information) is sent. The multi-access session management method is applicable to the data transmission of the multi-access session that supports the multiple 3GPP paths or the multiple non-3GPP paths.

In an optional example, before step 902 (to be specific, the session management device sends, to the mobility management device, the tunnel information corresponding to the transmission paths and the access technology information corresponding to the transmission paths, and correspondingly, the mobility management device receives, from the session management device, the tunnel information corresponding to the transmission paths and the access technology information corresponding to the transmission paths), the mobility management device may further send first information to the session management device, where the first information is used to obtain the tunnel information corresponding to the transmission paths. For example, the first information includes but is not limited to one or more of the following: a first quantity of transmission paths registered by the terminal device and one or more pieces of access technology information. In a possible implementation, that the first information is used to obtain the tunnel information corresponding to the transmission paths may be understood as that the first information may be used to determine a quantity of transmission paths, to determine a quantity of pieces of tunnel information.

Correspondingly, the session management device may further receive the first information from the mobility management device, and the session management device may obtain, based on the first information, the tunnel information corresponding to the transmission paths. Based on the first information, the session management device can more accurately learn of a quantity of pieces of tunnel information to be obtained for establishing a multi-access session connection.

The first quantity of transmission paths registered by the terminal device may be the same as a quantity of paths included in the multi-access session. Alternatively, the first quantity of transmission paths registered by the terminal device is specific for each access technology, and a sum of first quantities of registered transmission paths respectively corresponding to multiple access technologies is the same as a quantity of paths included in the multi-access session.

When the multiple transmission paths use the same access technology, the first information may include one or more pieces of access technology information.

When the first information includes only one piece of access technology information, usually, the first information further needs to include the first quantity of transmission paths registered by the terminal device. Because a quantity of paths cannot be determined by using one piece of access technology information, the quantity of transmission paths included in the multi-access session can be determined only when the one piece of access technology information is used in combination with the first quantity of registered transmission paths. In this case, the first quantity of registered transmission paths is the quantity of paths included in the multi-access session.

When there are multiple pieces of access technology information included in the first information, a quantity of access technologies may be independently used to determine the quantity of paths included in the multi-access session. For example, the quantity of access technologies is the quantity of paths included in the multi-access session. The quantity of access technologies may alternatively be used in combination with the first quantity of registered transmission paths to determine the quantity of paths included in the multi-access session. In this case, the first quantity of registered transmission paths may be the quantity of paths included in the multi-access session. Alternatively, the first quantity of registered transmission paths may be the first quantity of registered transmission paths specific for each access technology. In this case, the sum of the first quantities of registered paths respectively corresponding to the multiple access technologies is the quantity of paths included in the multi-access session.

For example, the mobility management device sends a PDU session create session context request (Namf_PDU Session_CreateSMContext Request) or PDU session update session context request (Namf_PDU Session_UpdateSMContext Request) message to the session management device, where the request message includes the first information.

In an optional example, in the registration process of the terminal device, the mobility management device may obtain access network information, where the access network information indicates information about the access technology used by the terminal device. The access network information includes but is not limited to one or more of the following: an access node type, an access technology type, an access node name, an access node identifier, and an IPsec identifier. The access node type may be a Wi-Fi AP, the eNodeB, the gNodeB, a RAN, the NG-RAN, an untrusted Wi-Fi AP, a trusted Wi-Fi AP, or the like. The access technology type may be Wi-Fi, a cellular network, LTE, LTE-M, NR, frequency band information, or the like. The access node identifier may be identification information of a node connected to the UE, for example, a cell identifier, an SSID, or a Global RAN Node ID.

The mobility management device may determine the first information based on the information about the access technology used by the terminal device. The first information includes but is not limited to the first quantity of transmission paths registered by the terminal device or access technology information corresponding to the transmission paths.

In a scenario in which the multiple transmission paths correspond to the same access network device, and the UE accesses the same access network device in different manners (for example, one manner is that the UE is connected to the N3IWF via the Wi-Fi AP, and another manner is that the UE is connected to the N3IWF via the standalone non-public network SNPN), from the perspective of the mobility management device, there is only one transmission path and one access technology (for example, the untrusted non-3GPP access technology). However, from the perspective of the UE, there are two transmission paths, and access technologies corresponding to the two transmission paths are different. One is the non-3GPP access technology in which the connection is performed via Wi-Fi, and the other is the non-3GPP access technology in which the connection is performed via the SNPN. In this example, in the registration process of the terminal device, the mobility management device may obtain the access network information. Subsequently, the mobility management device may accurately determine, based on the information about the access technology used by the terminal device, the first quantity of transmission paths registered by the terminal device or the access technology information corresponding to the transmission paths. The multi-access session management method is applicable to the data transmission of the multi-access session that supports the multiple 3GPP paths or the multiple non-3GPP paths.

For example, the UE first sends the access network information to the access network device (for example, the N3IWF) corresponding to the transmission path, and then the access network device (for example, the N3IWF) corresponding to the transmission path sends the access network information to the mobility management device.

For example, the UE sends the access network information to the access network device (for example, the N3IWF) corresponding to the transmission path, and the access network device (for example, the N3IWF) corresponding to the transmission path modifies a format, or sends the access network information to the mobility management device via another device (for example, the user plane device).

For example, the UE includes the access network information in a NAS message, and transparently transmits the NAS message to the mobility management device via the access network device (for example, the N3IWF) corresponding to the transmission path.

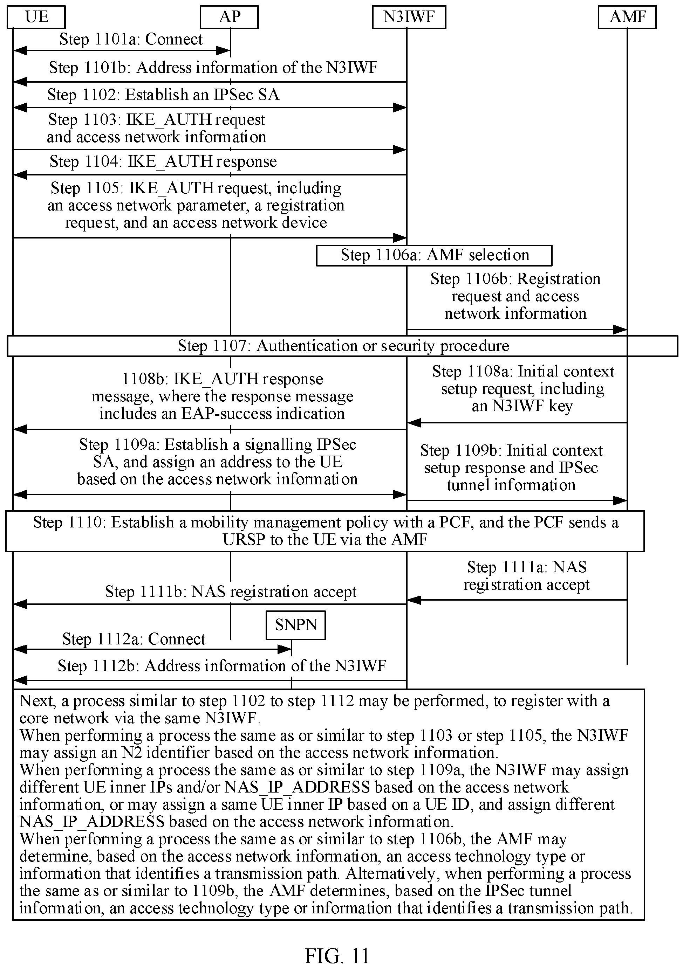

For a process in which the mobility management device obtains the access network information, refer to FIG. 11 described subsequently.

In an optional example, after the session management device receives the first information from the mobility management device, the session management device may further send second information to a policy control function PCF, where the second information is determined based on the first information. For example, the second information is the first information or a part of the first information, or the second information may be one or more of the quantity of transmission paths, the first quantity of transmission paths registered by the terminal device, the quantity of access technologies, and the like. In an optional example, the second information is used to obtain steering information of the multiple transmission paths (for example, the first transmission path and the second transmission path, and certainly, another transmission path may be further included) included in the multi-access session. In a possible implementation, the steering information may include one or more of a steering mode, steering functionality, and a threshold value. For example, the session management device sends a policy association establishment request (SM Policy association establishment request) message to a policy control device (for example, the PCF or a PCRF), where the request message includes the second information.

After receiving the second information, the policy control device may determine the steering information of the multiple transmission paths based on the second information, and send the steering information to the session management device. The steering information may include one or more of the steering mode, the steering functionality, and the threshold value. For example, the steering mode is an active-standby (Active-Standby) mode, a smallest delay (Smallest Delay) mode, a load-balancing (Load-Balancing) mode, or a priority-based (Priority-based) mode. In a possible implementation, the steering information may indicate the terminal device to transmit data through a target transmission path, and the target transmission path is one or more of the transmission paths registered by the terminal device. The target transmission path may include a transmission path corresponding to a same access type, or may include a transmission path corresponding to a same access technology. For example, the policy control device sends a policy association establishment response (SM Policy Association Establishment Response) message to the session management device, where the response message includes the steering information. For example, the policy control device sends a policy control and charging PCC rule to the session management device, where the PCC rule includes the steering information. For example, the PCC rule may be included in the policy association establishment response message.

After the session management device receives the steering information from the policy control device, the session management device may send the steering information to the user plane device (for example, the UPF). For example, the session management device sends an N4 session establishment request (N4 Session Establishment Request) message to the user plane device, where the request message includes the steering information. For example, the session management device sends a multi-access rule (multi-access rule, MAR) to the user plane device, where the MAR rule includes the steering information. The MAR rule may be determined according to the PCC rule. For example, the PCC rule is specific for an entire PDU session, the MAR rule is mainly used by the user plane device, and the MAR rule may be a part of the PCC rule. For example, the MAR rule is included in the N4 session establishment request message.

After the session management device receives the steering information from the policy control device, the session management device may further send the steering information to the UE. For example, the session management device may send the steering information to the mobility management device. The mobility management device receives the steering information (the steering information is determined based on the first information, and specifically, the steering information is determined by the policy control device based on the second information, where the second information is determined based on the first information) from the session management device, and sends the steering information to the UE. For example, the session management device sends an ATSSS rule to the mobility management device, where the ATSSS rule includes the steering information. For example, the session management device sends an N1 SM container to the mobility management device, where the N1 SM container includes the steering information. For example, the ATSSS rule is included in the N1 SM container. For example, the mobility management device includes the steering information in a NAS message and sends the NAS message to the UE.

In a possible implementation, the steering information sent by the session management device to the user plane device or the UE may be the same as or different from the steering information obtained by the session management device from the policy control device. It may be understood as that the session management device may determine, based on steering information 1 sent by the policy control device, steering information 2 sent to the user plane device or steering information 3 sent to the UE. The steering information 1, the steering information 2, and the steering information 3 may be the same or may be different. For example, the session management device may perform format conversion on the steering information 1 to obtain the steering information 2 and/or the steering information 3.

In this application, the quantity of paths in the multi-access session may be greater than or equal to 2, and at least two paths may correspond to a same access type. The steering information in this application may be determined based on the access technology (the access technology is a finer granularity than the access type), or determined based on the access technology and the fourth information, so that the steering information is better applicable to multiple architectures of the multi-access session.

In an optional example, in a scenario in which the mobility management device sends the first information to the session management device, where the first information includes but is not limited to one or more of the following: the first quantity of transmission paths registered by the terminal device and the one or more pieces of access technology information, the tunnel information of the transmission paths may be determined based on the first information. For example, the session management device may assign, based on the first information, the tunnel information corresponding to the transmission paths. Specifically, the session management device may determine a tunnel quantity based on the first information, and then the session management device may assign tunnel information corresponding to the tunnel quantity. Optionally, the session management device may further send the tunnel information to the user plane device. For another example, the session management device sends the first information to the user plane device, and receives, from the user plane device, the tunnel information corresponding to the transmission paths. Specifically, the session management device sends the first information to the user plane device, the user plane device determines the tunnel quantity based on the first information, and the user plane device may assign the tunnel information corresponding to the tunnel quantity.

In a scenario in which access network devices corresponding to the multiple transmission paths include a non-3GPP access network device (the plurality of transmission paths may correspond to different non-3GPP access network devices, or the multiple transmission paths may correspond to a same non-3GPP access network device), an example in which the access network device corresponding to the first transmission path and the access network device corresponding to the second transmission path each are a non-3GPP access network device is used. In an optional example, a first non-3GPP access network device in the first transmission path sends third information to the mobility management device. Correspondingly, the mobility management device receives the third information from the first non-3GPP access network device in the first transmission path. The third information includes one or more of the following: a quantity of internet protocol security child security associations IPsec child SAs established between the first non-3GPP access network device and the terminal device, a differentiated services code point DSCP value corresponding to each IPsec child SA, a quality of service flow identifier QFI associated with each IPsec child SA, and a tunnel identifier corresponding to each IPsec child SA. The third information may indicate the pieces of information by using a correspondence or a mapping relationship. In an optional example, the third information may be included in a PDU session response message (for example, an N2 PDU session response message) sent by the access network device to the mobility management device.

Then, the mobility management device sends the third information to a second non-3GPP access network device on the second transmission path, where the third information is used by the second non-3GPP access network device to establish a user plane resource with the terminal device. The pieces of information may be subsequently used as a reference for the second non-3GPP access network device. The second non-3GPP access network device may establish, adjust, or modify a user plane resource with the UE based on the information. Because of reference to the pieces of information, the user plane resource established between the second non-3GPP access network device and the UE is similar to or the same as a user plane resource established between the first non-3GPP access network device and the UE. For example, a quantity of IPsec child SAs established between the second non-3GPP access network device and the UE may be the same as a quantity of IPsec child SAs established between the second non-3GPP access network device and the UE. Further, one or more quality of service flow identifiers QFIs associated with the IPsec child SA established between the second non-3GPP access network device and the UE may be the same as one or more quality of service flow identifiers QFIs associated with the IPsec child SA established between the first non-3GPP access network device and the UE; and/or a differentiated services code point (differentiated services code point, DSCP) value associated with the IPsec child SA established between the second non-3GPP access network device and the UE may be the same as a DSCP value associated with the IPsec child SA established between the first non-3GPP access network device and the UE. In an optional example, the third information may be included in a PDU session response message (for example, an N2 PDU session response message) or a PDU session update session context request (Nsmf_PDU Session_UpdateSMContext Request) message sent by the mobility management device to the SMF device.

Before the second non-3GPP access network device establishes the IPsec child SA with the UE, when determining the quantity of IPsec child SAs, for example, the second non-3GPP access network device may determine the quantity of IPsec child SAs based on user plane resource information (for example, the third information described above) from the first non-3GPP access network device, and may further determine a mapping relationship (the mapping relationship is also referred to as a correspondence) between each IPsec child SA and a QoS Flow. Further, the second non-3GPP access network device establishes the IPsec child SA with the UE based on the quantity of IPsec child SAs and the mapping relationship (the mapping relationship may also be referred to as the correspondence) between each IPsec child SA and the QoS Flow.

This example is applicable to a case in which different transmission paths correspond to different non-3GPP access network devices. The different non-3GPP access network devices may include, for example, different N3IWFs, in this case, the first non-3GPP access network device and the second non-3GPP access network device each are an N3IWF, but two N3IWFs are different; include different TNGFs, in this case, the first non-3GPP access network device and the second non-3 GPP access network device each are a TNGF, but two TNGFs are different; or include an N3IWF and a TNGF, in this case, the first non-3GPP access network device is a TNGF and the second non-3GPP access network device is an N3IWF, or the first non-3GPP access network device is an N3IWF and the second non-3GPP access network device is a TNGF. This example is also applicable to a case in which different transmission paths correspond to a same non-3GPP access network device. In this case, the first access network device and the second access network device are the same. For example, both are an N3IWF. For example, the UE may be separately connected to the N3IWF via Wi-Fi and the SNPN.

In this example, the UE may register with the core network for multiple times via a same non-3GPP access network device or different non-3GPP access network devices, and establish the multi-access session, to improve flexibility of establishing the multi-access session. Different transmission paths (for example, different transmission paths corresponding to different access network devices or a same access network device) may mutually refer to user plane resources, to establish/adjust/modify the user plane resources established between the different transmission paths and the UE, to ensure that the user plane resources corresponding to the different transmission paths are the same or similar. In this way, quality of service of the different transmission paths may be equivalent or the same.

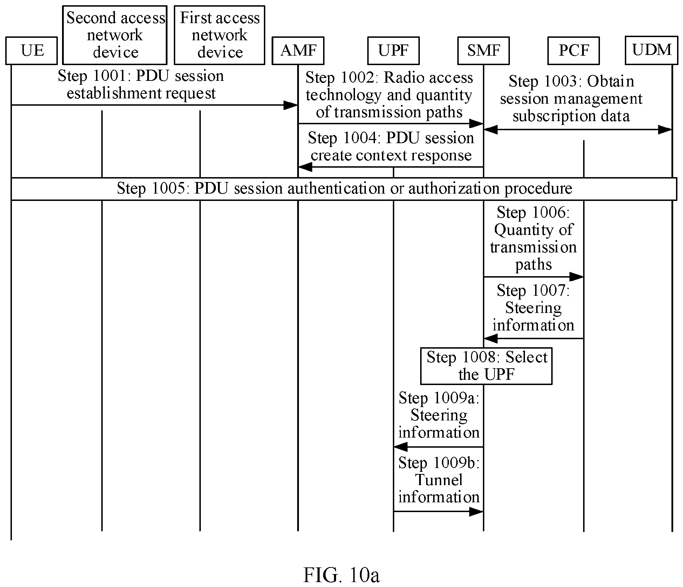

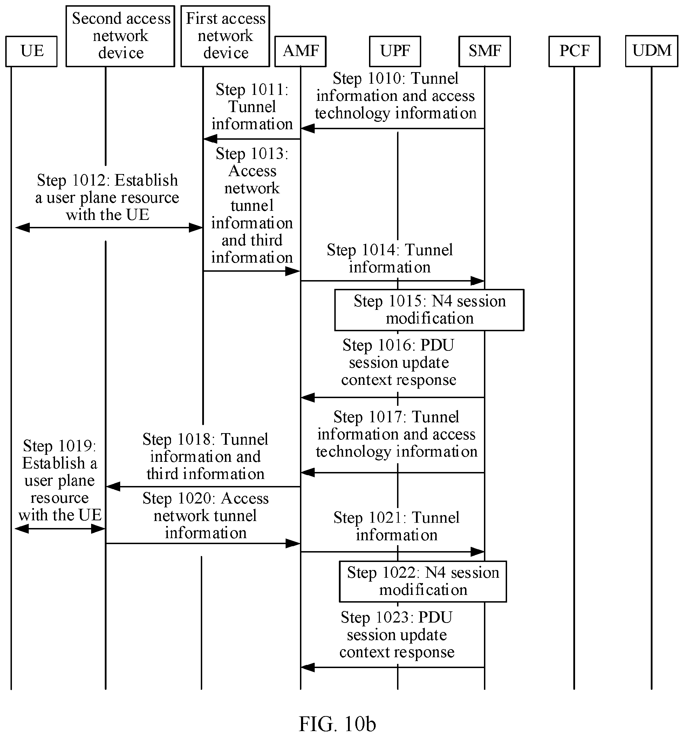

FIG. 10a and FIG. 10b are a schematic flowchart of establishing an MA PDU session. In this example, the MA PDU session corresponds to two transmission paths, and access network devices corresponding to the two transmission paths are different (for example, access types are different or access technologies are different). It may be understood that FIG. 10a and FIG. 10b may be considered as an overall procedure, and are divided into two parts only for ease of drawing.

Step 1001 (refer to step 301): UE sends, to an AMF, one or more of the following: a request type (request type), ATSSS capabilities (Capabilities) information, a PDU session identifier (PDU Session ID), a data network name requested by the UE (UE Requested DNN), slice information (S-NSSAI), first capability information, and the like.

The request type is a multi-access session request (MAPDU Request), indicating that a session establishment request message is used to request to establish the multi-access PDU session.

The ATSSS Capabilities are used to notify a network of steering functionality supported by the UE, for example, an MPTCP and/or an ATSSS-LL.

The first capability information indicates whether a terminal device supports accessing the network by using a same access type or a same access technology. In an example, the first capability information indicates that the terminal device supports accessing the network by using the same access type or the same access technology. In an example, the first capability information indicates that the terminal device does not support accessing the network by using the same access type or the same access technology. In a specific example, the first capability information indicates that the terminal device supports accessing the network by using a 3GPP access type but different access technologies. The 3GPP access type includes but is not limited to the following access technologies: NR, LTE, satellite access, high-earth orbit satellite access, medium-earth orbit satellite access, low-earth orbit satellite access, and the like.

For example, the UE sends a NAS message to the AMF, including the foregoing pieces of information. The NAS message is, for example, a PDU session establishment request (PDU Session Establishment Request) message.

Step 1002 (refer to step 302): The AMF sends, to an SMF, one or more of the following: one or more pieces of access technology information (which may also be referred to as a radio access technology type (radio access technology type, RAT type)), a first quantity of transmission paths registered by the terminal device, a UE identifier (for example, a subscription permanent identifier (subscription permanent identifier, SUPI)), the UE requested DNN, the PDU Session ID, the MA PDU Request, an access type (access type), the first capability information, and the like.

It should be noted that a current multi-access PDU session has only two transmission paths. An access type corresponding to one transmission path is a 3GPP access type, and an access type corresponding to the other transmission path is a non-3GPP access type. Therefore, the access type (access type) in step 302 includes the 3GPP access type and the non-3GPP access type, and the radio access technology type (RAT type) includes an access technology of the 3GPP access type and an access technology of the non-3GPP access type. However, in this application, there may be two or more transmission paths, and at least two of multiple transmission paths correspond to a same access type (for example, the non-3GPP access type or the 3GPP access type). Certainly, the multiple transmission paths may alternatively include transmission paths of different access types. In this case, the access type (access type) in step 1002 may include only the non-3GPP access type, include only the 3GPP access type, or include both the 3GPP access type and the non-3GPP access type. The radio access technology type (RAT type) in step 1002 may be one or more access technologies of the access type (access type).

The first capability information indicates whether the terminal device supports accessing the network by using the same access type or the same access technology. In an example, the first capability information indicates that the terminal device supports accessing the network by using the same access type or the same access technology. In an example, the first capability information indicates that the terminal device does not support accessing the network by using the same access type or the same access technology. The SMF may determine, based on the first capability information, a form of an MA PDU session that is allowed to be established by the UE. For example, the SMF determines, based on the first capability information and subscription data, the form of the MA PDU session that is allowed to be established by the UE. In addition, the SMF may further send the first capability information to a PCF, so that the PCF determines steering information based on the first capability information.

With reference to the foregoing descriptions, first information sent by the AMF to the SMF includes the first quantity of transmission paths registered by the terminal device and/or the access technology information (that is, the RAT type).

For example, the AMF sends a PDU session create session context request (Nsmf_PDU Session_CreateSMContext Request) message to the SMF, including the foregoing pieces of information.

Optionally, step 1003 (refer to step 303): The SMF obtains session management subscription data from a UDM. For example, the session management subscription data may be obtained in a subscription retrieval or subscription for updates (Subscription retrieval/subscription for updates) manner.

In a conventional technology, the UDM may record an access technology of the current multi-access PDU session, so that the UDM learns of a device serving the UE in the access technology, or the UDM determines whether the UE can establish a session or establish a user plane resource in a transmission path corresponding to the access technology. However, in this application, as multiple architectures of the multi-access PDU session emerge, a quantity of transmission paths in the multi-access PDU session increases. Because a larger quantity of transmission paths occupies more network resources, this application proposes an example of determining, based on the subscription data of the UE, the form of the multi-access PDU session that is allowed to be established by the UE. The form of the multi-access PDU session is, for example, an access technology and/or a quantity of transmission paths corresponding to the MA PDU. In this way, the network resources can be assigned more properly and differentiated services can be provided for multiple users.

For example, after the SMF obtains the subscription data of the UE from the UDM, the SMF may determine, based on the subscription data of the UE, the form of the MA PDU session that is allowed to be established by the UE. In a possible implementation, the SMF obtains the first capability information (for example, obtains the first capability information in step 1002). The first capability information indicates whether the terminal device supports accessing the network by using the same access type or the same access technology. In an example, the first capability information indicates that the terminal device supports accessing the network by using the same access type or the same access technology. In an example, the first capability information indicates that the terminal device does not support accessing the network by using the same access type or the same access technology. The SMF determines, based on the first capability information and the subscription data of the terminal device, the form of the session that is allowed to be established by the terminal device. For example, when the first capability information indicates that the terminal device supports accessing the network by using two (or more) 3GPP access types, the SMF may determine that the MAPDU session that is allowed to be established by the UE includes transmission paths of the two 3GPP access types (for example, transmission paths on an access network side of the MA PDU session include two 3GPP access networks).

For example, the UDM may determine, based on the subscription data of the UE, the form of the MA PDU session that is allowed to be established by the UE, and the UDM feeds back, to the SMF, the form of the MA PDU that is allowed to be established by the UE.

For example, the SMF sends, to the UDM, information about an access technology used during registration of the UE and/or the first quantity of transmission paths registered by the UE. The UDM determines, based on the subscription data of the UE, the form of the MA PDU session that is allowed to be established by the UE, and indicates, to the SMF, that the session establishment is allowed or not allowed. Further, if the session establishment is not allowed, allowed access technologies, allowed quantity of paths, and/or the like may be indicated. In this way, the information about the access technology used during the registration of the UE and/or the first quantity of transmission paths registered by the UE mentioned below are/is information about an allowed access technology and/or an allowed quantity of transmission paths.

Step 1004 (refer to step 304): The SMF sends, to the AMF, one or more of the following: a session context identifier and a cause (cause).

For example, the SMF sends a PDU session create session context response (Nsmf_PDU Session_CreateSMContext Response) message to the AMF.

Optionally, step 1005: Perform a PDU session authentication or authorization procedure. The process is not limited in this application.

Step 1006 (refer to step 306): The SMF sends, to the PCF, one or more of the following: the UE identifier (for example, the subscription permanent identifier (subscription permanent identifier, SUPI)), the UE requested DNN, the PDU Session ID, the MA PDU Request, the access type (access type), the access technology information (or referred to as the radio access technology type (radio access technology type, RAT type)), the first quantity of transmission paths registered by the terminal device, the first capability information, and the like.

It may be understood that the pieces of information sent by the SMF to the PCF in step 1006 may be determined based on the information received by the SMF in step 1002. For example, the information received in step 1002 is directly sent to the PCF, or the information received in step 302 may be sent to the PCF after format or content conversion.

The SMF sends the pieces of information to the PCF, to establish a session policy association with the PCF.

For example, the SMF sends a policy association establishment request (SM Policy association establishment request) message to the PCF, including the foregoing pieces of information.

Step 1007 (refer to step 307): The PCF sends the steering information to the SMF.

In a possible implementation, the steering information includes one or more of a steering mode (steering mode), steering functionality (steering functionality), and a threshold value (threshold value).

For example, the PCF sends a policy control and charging PCC rule and the like to the SMF. The PCC rule includes multi-access PDU session control information. The multi-access PDU session control information includes but is not limited to one or more of the following: the steering mode (steering mode), the steering functionality (steering functionality), the threshold value, and the like.

In a possible implementation, the PCF determines the steering information based on the first capability information obtained in step 1006.

In a possible implementation, the PCF determines the steering information based on the subscription data of the UE.

In a possible implementation, the PCF determines the steering information based on the subscription data of the UE and the first capability information.

For example, the PCF sends a policy association establishment response (SM Policy Association Establishment Response) message to the SMF, including the foregoing pieces of information.

It should be noted that, in this application, the quantity of paths of the multi-access session may be greater than or equal to 2, and at least two paths may correspond to a same access type. The steering information in this application may be determined based on the access technology (the access technology is a finer granularity than the access type), or determined based on three or more paths. In this way, the determined steering information is better applicable to multiple possible forms of the multi-access PDU session.

The SMF may send, to the PCF, the information about the access technology used during the registration of the UE and/or the quantity of paths registered by the UE. The PCF may determine the PCC rule based on the information about the access technology used during the registration of the UE and/or the quantity of paths registered by the UE. With reference to the descriptions of step 1002 and step 1003, the information about the access technology used during the registration of the UE and/or the quantity of paths registered by the UE may be from the AMF, or may be from the UDM.

It should be noted that, because an existing MA PDU session has a maximum of two transmission paths, one transmission path is of a 3GPP access type, and the other transmission path is of a non-3GPP access type, selecting a transmission path in an existing steering mode is equivalent to selecting an access type. However, in a new MA PDU session mode, selecting a transmission path is not equivalent to selecting an access type, and should be enhanced as selecting a specific transmission path or selecting an access technology. To be specific, for the steering mode, the selection of the transmission path or the selection of the access technology is performed, and the selection of the access type is no longer performed.

For example, the PCF sends the policy association establishment response (SM Policy Association Establishment Response) message to the SMF, including the foregoing pieces of information.

Step 1008: The SMF selects an appropriate UPF. The process is not limited.

Step 1009a (refer to step 309a): The SMF sends, to the UPF selected in step 1008, one or more of the following: the steering information, the first quantity of transmission paths registered by the terminal device, and a quantity of access technologies.

In a possible implementation, the steering information includes one or more of the steering mode (steering mode), the steering functionality (steering functionality), and the threshold value (threshold value).

For example, the SMF sends an N4 rule to the UPF selected in step 308, where the N4 rule includes but is not limited to one or more of the following: a packet detection rule (packet detection rule, PDR), a forwarding action rule (forwarding action rule, FAR), a multi-access rule (multi-access rule, MAR), and other rules. The MAR rule includes but is not limited to one or more of the following: the steering mode, the steering functionality, the threshold value (which may be determined based on the steering mode, the steering functionality, and the threshold value in step 1007), and other information. The N4 rule may be determined according to the PCC rule. For example, the PCC rule is specific for an entire PDU session, the N4 rule is mainly used by the UPF, and the N4 rule may be a part of the PCC rule.

For example, the SMF sends an N4 session establishment request (N4 Session Establishment Request) message to the UPF, including the foregoing pieces of information.

In a possible implementation, the steering information may include forwarding action rules in different transmission paths. For example, the steering information may include a forwarding action rule corresponding to a first access technology and/or a forwarding action rule corresponding to a second access technology. For another example, the steering information may include a forwarding action rule corresponding to a first transmission path and/or a forwarding action rule corresponding to a second transmission path. In the conventional technology, the forwarding action rule uses the access type as a granularity. In this application, the forwarding action rule may use the access technology as a granularity, and the access type is not distinguished; or the forwarding action rule may use the transmission path as a granularity, and the access type or the access technology is not distinguished.

As shown in Table 1, a forwarding action rule at a granularity of the access technology is described.

**Table 1: Forwarding action rule at the granularity of the access technology**

| | | |
|---|---|---|
| Forwarding action rule corresponding to an access technology type | Forwarding action rule identifier | Identifies a forwarding action that needs to be used |
| | Access technology (for example, a RAT type) | Indicates or represents an access technology corresponding to the transmission path |

As shown in Table 2, a forwarding action rule at a granularity of the transmission path is described.

**Table 2: Forwarding action rule at the granularity of the transmission path**

| | | |
|---|---|---|
| Forwarding action rule corresponding to the transmission path | Forwarding action rule identifier | Identifies a forwarding action that needs to be used |
| | Identifier of a path | Identifies a specific transmission path |

Step 1009b (refer to step 309b): The UPF sends multiple (two, three, or more) pieces of tunnel information to the SMF.

For example, the tunnel information is tunnel information on a core network side (CN tunnels info).

For example, the UPF determines a tunnel quantity based on the first quantity of transmission paths registered by the terminal device and/or the quantity of access technologies, and the UPF may assign tunnel information corresponding to the tunnel quantity.

It should be noted that, in this application, because the quantity of transmission paths may be greater than 2, the UPF may be notified of the first quantity of transmission paths registered by the terminal device and/or the quantity of access technologies, so that the UPF accurately assigns tunnel information corresponding to the quantity of transmission paths of the multi-access PDU session.

For example, the UPF sends an N4 session establishment response (N4 Session Establishment Response) message to the SMF, including the foregoing pieces of information.

Through step 1009a and step 1009b, the SMF establishes an N4 connection to the UPF selected in step 1008.

Step 1010 (refer to step 310): The SMF sends, to the AMF, first tunnel information corresponding to the first transmission path and access technology information corresponding to the first transmission path.

The access technology information may indicate an access technology of a path through which the AMF transmits the tunnel information (and other information), so that the AMF can send the tunnel information (and the other information) to an access network device corresponding to the path of the access technology. For example, the UE performs access via both a 4G access network device (eNodeB) and a 5G access network device (NG-RAN). In this case, the SMF not only indicates the AMF to send the tunnel message (and the other information) through 3GPP access, but also further indicates whether to send the tunnel message (and the other information) by using an LTE access technology or an NR access technology, so that the AMF can determine to send the tunnel message (and the other information) to the eNodeB, the NG-RAN, or a gNodeB.

The first tunnel information is sent to an access network device corresponding to the access technology, for example, referred to as a first access network device, to notify the first access network device of a destination (which may be understood as a destination address of uplink data) to which the uplink data should be sent.

In this application, because at least two of the multiple transmission paths corresponding to the multi-access PDU session correspond to a same access type (for example, the 3GPP access type or the non-3GPP access type), this application proposes that the SMF sends, to the AMF, the access technology information which is a finer granularity than the access type, and the AMF may accurately identify a corresponding access network device based on the access technology information, that is, accurately identify each transmission path. In this way, the AMF may send the tunnel information (and the other information) to the corresponding access network device, to implement multi-access PDU session management.

For example, the first tunnel information corresponding to the first transmission path may be included in N2 interface session management information (N2 SM information). For example, the SMF sends the N2 interface session management information (N2 SM information) and the access technology information to the AMF.

Further, optionally, the SMF may send the steering information (which may be from step 1007) to the AMF. For example, the steering information may be included in an N1 SM container, and the SMF may further send the N1 interface session management container (N1 SM Container) to the AMF.

For example, the N2 SM information includes but is not limited to one or more of the following: the PDU session identifier (PDU Session ID) (which may be reported by the UE in step 1001), the first tunnel information on the core network side (CN Tunnel Info), (which may be a piece of CN Tunnel Info from step 1009b), a QoS profile (QoS profile), an associated QoS flow identifier (associated QFI), and the like. Subsequently, the N2 SM information is sent by the SMF to the first access network device via the AMF.

For example, the N1 SM container includes but is not limited to one or more of the following: a PDU session establishment accept (PDU Session Establishment Accept) message (which may be considered as a reply/response to the PDU session establishment request in step 1001), the steering information, and other session-related information. The steering information may be included in an ATSSS rule (rule), and the ATSSS rule includes but is not limited to one or more of the following: the steering mode, the steering functionality, the threshold value (which may be from step 1007), and other information. Subsequently, the information in the N1 SM container is sent by the SMF to the UE via the AMF. For example, the AMF sends the N1 SM container to the UE via a NAS message.

In a possible implementation, the ATSSS rule may include the following information.

As shown in Table 3, steering information at a granularity of the access technology is described.

**Table 3: Steering information at the granularity of the access technology**

| | |
|---|---|
| Description of access technology selection | Used to determine an access technology corresponding to a transmission path used for transmission |
| Steering mode | Describes how data is transmitted in transmission paths corresponding to different access technologies |

As shown in Table 4, steering information at a granularity of the transmission path is described.

**Table 4: Steering information at the granularity of the transmission path**

| | |
|---|---|
| Description of transmission path selection | Used to determine a transmission path that corresponds to an access technology and that is used for transmission |
| Steering mode | Describes how data is transmitted in different transmission paths (for example, transmitted in transmission paths represented by different transmission path identifiers) |

For example, the SMF sends an N1N2 message transfer (Namf_Communication_N1N2MessageTransfer) message to the AMF, including the foregoing pieces of information.

The AMF device may further send a response to the SMF device, to indicate that the information from the SMF device is received.

Step 1011 (refer to step 311): The AMF sends, to the first access network device, the first tunnel information corresponding to a transmission path in which the first access network device is located.

For example, the AMF sends the N2 SM information (which may be from step 1010) to the first access network device, where the N2 SM information includes but is not limited to the first tunnel information.

Optionally, the AMF may further send the steering information to the first access network device, and the first access network device sends the steering information to the UE. The access network device may forward (that is, transparently transmit) the steering information. For example, the AMF sends the N1 SM container to the first access network device, where the N1 SM container includes but is not limited to the steering information. For example, the AMF sends a NAS message (the NAS message needs to be sent to the UE) to the first access network device, where the NAS message includes but is not limited to the steering information. For example, the NAS message includes but is not limited to the N1 SM container (which may be from step 1010), where the N1 SM container includes but is not limited to the steering information.

Further, the NAS message may include but is not limited to one or more of the following: the PDU session identifier (PDU Session ID) (which may be from the N2 SM information in step 1010), the PDU session establishment accept (PDU Session Establishment Accept) message, the ATSSS rule (rule), and other information. Optionally, the steering information may be included in the ATSSS rule (rule).

Before performing a multi-access PDU session establishment process, the UE has performed a registration procedure, and the AMF knows access network devices with which the UE registers. The AMF may determine a corresponding access network device based on the access technology information indicated by the SMF, and send the pieces of information to the corresponding access network device.

For example, the AMF sends an N2 PDU session request message to the first access network device, including the foregoing pieces of information.

Step 1012 (refer to step 312 or step 319): The first access network device establishes (or adjusts or modifies) a user plane resource with the UE.

If the first access network device is an access network device corresponding to the 3GPP access type, the first access network device establishes (or adjusts or modifies) an air interface resource with the UE, and specific resource setup is performed on the access network (AN-specific resource setup), to establish a data radio bearer DRB.

If the first access network device is an access network device (for example, an N3IWF) corresponding to the non-3GPP access type, the first access network device establishes (or adjusts or modifies), with the UE, an internet protocol security child security association (IPsec child SA) used for transmission of user plane data. In this process, the first access network device assigns an IP address (for example, UP_IP_ADDRESS) of the IPsec child SA to the UE. To be specific, when the UE sends uplink data, a destination IP address should be set to UP_IP_ADDRESS, and a source IP address is an "inner" IP address assigned during registration.

A quantity of IPsec child SAs established between the UE and the first access network device corresponding to the non-3GPP access type, and pieces of quality of service flow (QoS Flow) data of which transmission is performed by each IPsec child SA are determined based on a policy and a configuration of the first access network device. For example, the first access network device corresponding to the non-3GPP access type may determine the quantity of IPsec child SAs based on a quantity of QoS Flows, and may further determine a mapping relationship (the mapping relationship may also be referred to as a correspondence) between each IPsec child SA and a QoS Flow.

For example, the first access network device (the access network device (for example, the N3IWF) corresponding to the non-3GPP access type) sends an internet key exchange create child security association request (IKE_Create_Child_SA request) message to the UE. For example, the request message may indicate that a requested IPsec child SA runs in a tunnel mode (tunnel mode). For example, the request message includes but is not limited to one or more of the following: one or more QFIs associated with the Child SA, a PDU session identifier associated with the Child SA, a DSCP value associated with the Child SA, default Child SA indication information, other QoS information, and an IP address (for example, UP_IP_ADDRESS) of the IPsec child SA. Optionally, the UE may further send an internet key exchange create child security association request (IKE_Create_Child_SA request) message to the first access network device. If the first access network device (the access network device (for example, the N3IWF) corresponding to the non-3GPP access type) needs to establish multiple IPsec child SAs with the UE, IP addresses (for example, UP_IP_ADDRESS) of the multiple IPsec child SAs are different. The first access network device may repeat the foregoing process of sending a request and a response with the UE, and assign IP addresses (for example, UP_IP_ADDRESS) of different IPsec child SAs.

Optionally, the first access network device may send the steering information to the UE. For example, the first access network device sends the N1 SM container to the UE, where the N1 SM container includes the steering information. For example, the first access network device sends a NAS message to the UE, where the NAS message includes the steering information. For example, the NAS message includes the N1 SM container (which may be from step 1011), where the N1 SM container includes the steering information. Further, the NAS message may include but is not limited to one or more of the following: the PDU session identifier (PDU Session ID), the PDU session establishment accept (PDU Session Establishment Accept) message, the ATSSS rule (rule), and other information. Optionally, the steering information may be included in the ATSSS rule (rule). Usually, the NAS message is sent to the UE by the access network device corresponding to the 3GPP access type.

Step 1013 (refer to step 313): The first access network device sends access network tunnel information (AN tunnels info) on a first access network device side to the AMF, where the access network tunnel information on the first access network device side is used to notify the UPF of a destination to which downlink data should be sent. The AN tunnels info on the first access network device side is subsequently sent to the UPF via the AMF and the SMF. Refer to step 1013, step 1014, and step 1015.

In an optional example, in a scenario in which the first access network device corresponding to the first transmission path and a second access network device corresponding to the second transmission path each are a non-3GPP access network device, the first access network device may further send, to the AMF device, one or more of the following (that is, the third information mentioned above): the quantity of internet protocol security child security associations IPsec child SAs established between the first access network device and the terminal device, a differentiated services code point DSCP value corresponding to each IPsec child SA, a quality of service flow identifier QFI associated with each IPsec child SA, and a tunnel identifier corresponding to each IPsec child SA. In this way, subsequently, the AMF sends the third information to the second non-3GPP access network device in the second transmission path, where the third information is used by the second non-3GPP access network device to establish a user plane resource with the terminal device. The pieces of information may be subsequently used as a reference for the second non-3GPP access network device. The second non-3GPP access network device may establish, adjust, or modify a user plane resource with the UE based on the information.

For example, the first access network device sends an N2 PDU session response message to the AMF, including the foregoing pieces of information.

Step 1014 (refer to step 314): The AMF sends the access network tunnel information (AN tunnels info) on the first access network device side (which may be from step 313) to the SMF.

For example, the AMF sends the N2 PDU session response message to the SMF, where the N2 PDU session response message includes the access network tunnel information (AN tunnels info) on the first access network device side.

For another example, the AMF sends a PDU session update session context request (Nsmf_PDU Session_UpdateSMContext Request) message to the SMF, where the request message includes the access network tunnel information (AN tunnels info) on the first access network device side. For another example, the PDU session update session context request message includes the N2 PDU session response message, and the N2 PDU session response message includes the access network tunnel information (AN tunnels info) on the first access network device side.

Step 1015 (refer to step 315): The SMF sends the access network tunnel information (AN tunnels info) on the first access network device side to the UPF.

For example, the SMF sends the access network tunnel information (AN tunnels info) on the first access network device side to the UPF through an N4 session modification (N4 Session Modification) procedure.

Step 1016 (refer to step 316): The SMF sends success or failure indication information to the AMF.

For example, the SMF sends a PDU session update session context response (Nsmf_PDU Session_UpdateSMContext Response) message to the AMF, where the response message includes the update success or update failure indication information.

If an update fails, the SMF may further send a failure cause value to the AMF.

Step 1017 (refer to step 317): The SMF sends, to the AMF, second tunnel information corresponding to the second transmission path and access technology information corresponding to the second transmission path.

The access technology information may indicate an access technology of a path through which the AMF transmits the tunnel information (and the other information), so that the AMF can send the tunnel information (and the other information) to an access network device corresponding to the path of the access technology.

The second tunnel information is sent to the access network device corresponding to the access technology, for example, referred to as the second access network device, to notify the second access network device of a destination (which may be understood as a destination address of uplink data) to which the uplink data should be sent.

In this application, because at least two of the multiple transmission paths corresponding to the multi-access PDU session may correspond to a same access type (for example, the 3GPP access type or the non-3GPP access type), this application proposes that the SMF sends, to the AMF, the access technology information which is a finer granularity than the access type, and the AMF may accurately identify, based on the access technology information, a corresponding access network device when the UE has registered, that is, accurately identify each transmission path. In this way, the AMF may send the tunnel information (and the other information) to the corresponding access network device, to implement accurate multi-access PDU session management.

For example, the second tunnel information corresponding to the second transmission path may be included in N2 interface session management information (N2 SM information). For example, the SMF sends the N2 interface session management information (N2 SM information) and the access technology information to the AMF.

Further, optionally, the SMF may send the steering mode (which may be from step 1007) to the AMF. For example, the steering mode may be included in an N1 SM container, and the SMF may further send the N1 interface session management container (N1 SM container) to the AMF. If the N1 interface session management container (N1 SM container) has been sent via the first access network device in step 1010, the N1 interface session management container may not need to be sent in step 1017. Certainly, for reliable transmission, the N1 interface session management container may be sent again. An example in which the N1 interface session management container (N1 SM container) is not sent in step 1017 is used below for description.

For example, the N2 SM information includes but is not limited to one or more of the following: the PDU session identifier (PDU Session ID) (which may be reported by the UE in step 1001), the second tunnel information on the core network side (CN Tunnel Info) (which may be another piece of CN Tunnel Info from step 1009b, where the CN Tunnel Info in step 1017 is different from the CN Tunnel Info in step 1010), a QoS profile (QoS profile), an associated QoS flow identifier (associated QFI), and the like. Subsequently, the N2 SM information is sent by the SMF to the second access network device via the AMF.

For example, the SMF sends an N1N2 message transfer (Namf_Communication_N1N2MessageTransfer) message to the AMF, including the foregoing pieces of information.

The AMF device may further send a response to the SMF device, to indicate that the information from the SMF device is received.

Step 1018 (refer to step 318): The AMF sends, to the second access network device, the second tunnel information corresponding to a transmission path in which the second access network device is located.

For example, the AMF sends the N2 SM information (which may be from step 1010) to the second access network device, where the N2 SM information includes but is not limited to the second tunnel information.

Before performing a multi-access PDU session establishment process, the UE has performed a registration procedure, and the AMF knows access network devices with which the UE registers. The AMF may determine a corresponding access network device based on the access technology information indicated by the SMF, and send the pieces of information to an appropriate access network device.

In an optional example, in the scenario in which the first access network device corresponding to the first transmission path and the second access network device corresponding to the second transmission path each are the non-3GPP access network device, as described in step 1013, the first access network device may further send, to the AMF device, one or more of the following (that is, the third information mentioned above): the quantity of internet protocol security child security associations IPsec child SAs established between the first non-3GPP access network device and the terminal device, the differentiated services code point DSCP value corresponding to each IPsec child SA, the quality of service flow identifier QFI associated with each IPsec child SA, and the identifier corresponding to each IPsec child SA. In this way, subsequently, the AMF sends the third information to the second non-3GPP access network device in the second transmission path, where the third information is used by the second non-3GPP access network device to establish the user plane resource with the terminal device. In step 1018, the pieces of information may be sent to the second access network device (non-3GPP access network device), and are used as the reference for the second access network device. The second access network device may establish, adjust, or modify the user plane resource with the UE based on the information.

For example, the AMF sends an N2 PDU session request message to the second access network device, including the foregoing pieces of information.

Step 1019 (refer to step 312 or step 319): The second access network device establishes (or adjusts or modifies) the user plane resource with the UE.

If the second access network device is an access network device corresponding to the 3GPP access type, the second access network device establishes (or adjusts or modifies) an air interface resource with the UE, and specific resource setup is performed on the access network (AN-specific resource setup), to establish a data radio bearer DRB.

If the second access network device is an access network device corresponding to the non-3GPP access type, the second access network device establishes (or adjusts or modifies), with the UE, an internet protocol security child security association (IPsec child SA) used for transmission of user plane data. In this process, the second access network device assigns an IP address (for example, UP_IP_ADDRESS) of the IPsec child SA to the UE. To be specific, when the UE sends uplink data, a destination IP address should be set to UP_IP_ADDRESS, and a source IP address is an "inner" IP address assigned during registration.

A quantity of IPsec child SAs established between the UE and the second access network device corresponding to the non-3GPP access type, and pieces of quality of service flow (QoS Flow) data of which transmission is performed by each IPsec child SA may be determined based on a policy and a configuration of the second access network device. For example, the second access network device may determine the quantity of IPsec child SAs based on a quantity of QoS Flows, and may further determine a mapping relationship (the mapping relationship may also be referred to as a correspondence) between each IPsec child SA and a QoS Flow.

For example, the second access network device (the access network device (for example, an N3IWF) corresponding to the non-3GPP access type) sends an internet key exchange create child security association request (IKE_Create_Child_SA request) message to the UE. For example, the request message may indicate that a requested IPsec child SA runs in a tunnel mode (tunnel mode). For example, the request message includes but is not limited to one or more of the following: one or more QFIs associated with the Child SA, a PDU session identifier associated with the Child SA, a DSCP value associated with the Child SA, default Child SA indication information, other QoS information, and an IP address (for example, UP_IP_ADDRESS) of the IPsec child SA. Optionally, the UE may further send an internet key exchange create child security association request (IKE_Create_Child_SA request) message to the second access network device. If the second access network device (the access network device (for example, the N3IWF) corresponding to the non-3GPP access type) needs to establish multiple IPsec child SAs with the UE, IP addresses (for example, UP_IP_ADDRESS) of the multiple IPsec child SAs are different. The second access network device may repeat the foregoing process of sending a request and a response with the UE, and assign IP addresses (for example, UP_IP_ADDRESS) of different IPsec child SAs.

In an optional example, in the scenario in which the first access network device corresponding to the first transmission path and the second access network device corresponding to the second transmission path each are the non-3GPP access network device, the second access network device may refer to one or more of the following (that is, the third information mentioned above): the quantity of internet protocol security child security associations IPsec child SAs established between the first non-3GPP access network device and the terminal device, the differentiated services code point DSCP value corresponding to each IPsec child SA, the quality of service flow identifier QFI associated with each IPsec child SA, and the identifier corresponding to each IPsec child SA, to establish, adjust, or modify the user plane resource with the UE.

For example, the user plane resource established between the second access network device and the UE is similar to or the same as the user plane resource established between the first access network device and the UE. For example, the quantity of IPsec child SAs established between the second access network device and the UE may be the same as the quantity of IPsec child SAs established between the second access network device and the UE. Further, one or more quality of service flow identifiers QFIs associated with the IPsec child SA established between the second access network device and the UE may be the same as one or more quality of service flow identifiers QFIs associated with the IPsec child SA established between the first access network device and the UE; and/or a differentiated services code point DSCP value corresponding to the IPsec child SA established between the second access network device and the UE may be the same as a DSCP value corresponding to the IPsec child SA established between the first access network device and the UE.

Before the second access network device establishes the IPsec child SA with the UE, when determining the quantity of IPsec child SAs, for example, the second access network device may determine the quantity of IPsec child SAs based on user plane resource information (for example, the third information described above) from the first access network device, and may further determine the mapping relationship (the mapping relationship may also be referred to as the correspondence) between each IPsec child SA and the QoS Flow. Further, the second access network device establishes the IPsec child SA with the UE based on the quantity of IPsec child SAs and the mapping relationship (the mapping relationship may also be referred to as the correspondence) between each IPsec child SA and the QoS Flow.

Step 1020 (refer to step 320): The second access network device sends access network tunnel information (AN tunnels info) on a second access network device side to the AMF, where the access network tunnel information on the second access network device side is used to notify the UPF of a destination to which downlink data should be sent. The AN tunnels info on the second access network device side is subsequently sent to the UPF via the AMF and the SMF. Refer to step 1020, step 1021, and step 1022.

For example, the second access network device sends an N2 PDU session response message to the AMF, including the foregoing pieces of information.

Step 1021 (refer to step 321): The AMF sends the access network tunnel information (AN tunnels info) on the second access network device side (which may be from step 1013) to the SMF.

For example, the AMF sends the N2 PDU session response message to the SMF, where the N2 PDU session response message includes the access network tunnel information (AN tunnels info) on the second access network device side.

For another example, the AMF sends a PDU session update session context request (Nsmf_PDU Session_UpdateSMContext Request) message to the SMF, where the request message includes the access network tunnel information (AN tunnels info) on the first access network device side. For another example, the PDU session update session context request message includes the N2 PDU session response message, and the N2 PDU session response message includes the access network tunnel information (AN tunnels info) on the second access network device side.

Step 1022 (refer to step 322): The SMF sends the access network tunnel information (AN tunnels info) on the second access network device side to the UPF.

For example, the SMF sends the access network tunnel information (AN tunnels info) on the second access network device side to the UPF through an N4 session modification (N4 Session Modification) procedure.

Step 1023 (refer to step 323): The SMF sends success or failure indication information to the AMF.

For example, the SMF sends a PDU session update session context response (Nsmf_PDU Session_UpdateSMContext Response) message to the AMF, where the response message includes the update success or update failure indication information.

If an update fails, the SMF may further send a failure cause value to the AMF.

If the UE further needs to establish a user plane channel via another access network device, a process similar to step 1017 to step 1023 may be performed again. It should be noted that the access technology information that corresponds to the transmission path and that is sent by the SMF via the AMF needs to meet that the AMF determines the corresponding access network device. In addition, a user plane connection established between the access network device and the UE may be established in a manner of establishing a user plane connection in the access technology.

In addition, the example in FIG. 10a and FIG. 10b is also applicable to a scenario in which two (or more than two) transmission paths correspond to a same access network device, that is, the first access network device and the second access network device are a same access network device. In this case, that the UE is connected to a same access network device in different access manners (the access manner is, for example, the access type or the access technology) may be considered as that the UE establishes an MA PDU session via one access network device (which may be understood as that multiple transmission paths correspond to one access network device).

The access network device may be a non-3GPP access network device, for example, an N3IWF. For example, the UE establishes an IPsec tunnel with the N3IWF via Wi-Fi, and registers with the core network via the N3IWF. In addition, the UE establishes another IPsec tunnel with the same N3IWF via an SNPN, and registers with the core network via the N3IWF. In this example, an access technology corresponding to the first transmission path in which the first access network device is located may be referred to as a non-3GPP access technology (or referred to as an untrusted non-3GPP access technology 1, or referred to as an untrusted non-3GPP path 1 (untrusted N3GPP path 1)) in which a connection is performed via Wi-Fi. An access technology corresponding to the second transmission path in which the first access network device is located may be referred to as a non-3GPP access technology (or referred to as an untrusted non-3GPP access technology 2, or referred to as an untrusted non-3GPP path 2 (untrusted N3GPP path 2)) in which a connection is performed via the SNPN.

In this embodiment, because the UE registers with the core network for multiple times via the same N3IWF, from the perspective of a device granularity, the AMF sends multiple pieces of tunnel information to the same N3IWF, but sends the multiple pieces of tunnel information through different N2 messages, N2 interfaces, or logical N2 channels. As a result, the N3IWF maps the received information to different transmission paths, or the N3IWF sends the information to the UE in different manners (for example, sends the information to the UE through a Wi-Fi transmission path, or sends the information to the UE through an SNPN connection). Therefore, an N2 message, an N2 interface, or a logical N2 channel needs to be distinguished by using an access technology indicated by the SMF for the AMF to send information (for example, an N1N2 message). Therefore, an untrusted non-3GPP access technology may be numbered (for example, the untrusted non-3GPP access technology 1 or the untrusted non-3GPP access technology 2), or an identifier of a transmission path (for example, the untrusted non-3GPP path 1 or the untrusted non-3GPP path 2) is added to the access technology, so that different transmission paths can be distinguished by using indication information of the AMF. In addition, the N3IWF may determine a quantity of IPsec child SAs in the transmission path 2 and a corresponding DSCP value based on a quantity of IPsec child SAs determined in the transmission path 1, and associate each IPsec child SA with one or more same QFIs, DSCP values, and the like.

This application proposes an example in which the UE registers with the core network for multiple times via a same access network device. For example, the UE accesses the same access network device in different manners (for example, one manner is that the UE is connected to the N3IWF via a Wi-Fi AP, and another manner is that the UE is connected to the N3IWF via the standalone non-public network SNPN). In this way, access network devices corresponding to multiple transmission paths corresponding to multi-access session management may be a same access network device, and the multiple transmission paths corresponding to the multi-access session management correspond to different access technologies. From the perspective of a mobility management device, there is only one transmission path and one access technology (for example, the untrusted non-3GPP access technology). However, from the perspective of the UE, there are two transmission paths, and access technologies corresponding to the two transmission paths are different. One is the non-3GPP access technology in which the connection is performed via Wi-Fi, and the other is the non-3GPP access technology in which the connection is performed via the SNPN. In this example, the mobility management device may identify a manner or an access technology used by the UE to connect to the access network device (for example, the N3IWF).

As shown in FIG. 11, a registration procedure in an untrusted non-3GPP access technology applicable to this application is provided.

Step 1101a (refer to step 201a): UE is connected to an untrusted non-3GPP access network, and is assigned one IP address.

The untrusted non-3GPP access network herein may be an access network deployed by a non-operator, and may include devices such as an access node (access point, AP), a router, a switch, and a gateway. Subsequently, the UE may communicate with an N3IWF via the untrusted non-3GPP access network.

Step 1101b (refer to step 201b): The UE selects the N3IWF, and obtains address information of the N3IWF.

Step 1102 (refer to step 202): The UE establishes an internet protocol security security association IPsec SA with the N3IWF.

For example, the UE establishes the IPsec SA with the N3IWF by initiating an internet key exchange (internet key exchange, IKE) initial exchange.

Step 1103 (refer to step 203): The UE sends a terminal device identifier (UE ID) to the N3IWF selected in step 1101b.

In an optional example, the UE sends access network information to the N3IWF selected in step 1101b. The access network information may indicate information about an access technology used by the UE. Subsequently, a mobility management device may determine, based on the information about the access technology used by the terminal device, a first quantity of transmission paths registered by the terminal device or access technology information corresponding to the transmission paths.

The access network information includes but is not limited to one or more pieces of the following information: an access node type, an access technology type, an access node name, an access node identifier, and an IPsec identifier. The access node type may be a Wi-Fi AP, an eNodeB, a gNodeB, a RAN, an NG-RAN, an untrusted Wi-Fi AP, a trusted Wi-Fi AP, or the like. The access technology type may be Wi-Fi, a cellular network, LTE, LTE-M, NR, frequency band information, or the like. The access node identifier may be identification information of a node connected to the UE, for example, a cell identifier, an SSID, a Global RAN Node ID, or a closed access group (closed access group, CAG) identifier.

For example, the UE sends a request message to the N3IWF. The request message includes one or more of the following: the terminal device identifier (UE ID) and the access network information. It should be noted that the request message does not include an AUTH payload (payload). This indicates that the request message is used to exchange extensible authentication protocol (extensible authentication protocol, EAP) signalling. In a possible implementation, the request message is a key exchange authentication IKE_AUTH request message.

Step 1104 (refer to step 204): The N3IWF sends an extensible authentication protocol request (EAP Request) data packet to the UE.

For example, the N3IWF sends a response message to the UE, where the response message includes the extensible authentication protocol request (EAP Request) data packet. In a possible implementation, the response message is a key exchange authentication IKE_AUTH response message.

The EAP Request data packet may include a start (for example, 5G-Start) data packet. The EAP-Request data packet (for example, the 5G-Start data packet) is used to notify the UE to initiate an EAP (for example, EAP-5G) session, or it may be understood as that the EAP-Request data packet (for example, the 5G-Start data packet) is used to notify the UE to start to send a non-access stratum (non-access stratum, NAS) message. When the UE sends the NAS message, the NAS message is usually encapsulated in an EAP (for example, EAP-5G) data packet.

Step 1105 (refer to step 205): The UE sends an extensible authentication protocol response (EAP-Response) data packet to the N3IWF.

For example, the UE sends a request message to the N3IWF, where the request message includes the extensible authentication protocol response (EAP-Response) data packet. In a possible implementation, the request message is a key exchange authentication (IKE_AUTH) request message.

The EAP-Response data packet may include a NAS (for example, 5G-NAS) data packet, and the NAS data packet may include an access network (AN) parameter and a registration request message. The AN parameter includes parameter information used by the N3IWF to select an AMF. The parameter information may include one or more of the following: a globally unique AMF identifier (globally unique AMF identifier, GUAMI), a public land mobile network (public land mobile network, PLMN ID), a network identifier (NID), and the like. The registration request message is included in a non-access stratum PDU (NAS-PDU).

In a possible implementation, the registration request message includes first capability information. The first capability information indicates whether the terminal device supports accessing a network by using a same access type or a same access technology. In an example, the first capability information indicates that the terminal device supports accessing the network by using the same access type or the same access technology. In an example, the first capability information indicates that the terminal device does not support accessing the network by using the same access type or the same access technology.

In an optional example, the UE sends the access network information to the N3IWF. The access network information may indicate the information about the access technology used by the UE. Subsequently, the mobility management device may determine, based on the information about the access technology used by the terminal device, the first quantity of transmission paths registered by the terminal device or the access technology information corresponding to the transmission paths.

The access network information includes but is not limited to one or more pieces of the following information: the access node type, the access technology type, the access node name, the access node identifier, and the IPsec identifier. The access node type may be the Wi-Fi AP, the eNodeB, the gNodeB, the RAN, the NG-RAN, the untrusted Wi-Fi AP, the trusted Wi-Fi AP, or the like. The access technology type may be the Wi-Fi, the cellular network, the LTE, the LTE-M, the NR, the frequency band information, or the like. The access node identifier may be the identification information of the node connected to the UE, for example, the cell identifier, the SSID, or the Global RAN Node ID.

The access network information may be included in the AN parameter; or the access network information may be included in the NAS (for example, 5G-NAS) data packet.

Step 1106a (refer to step 206a): The N3IWF may perform AMF selection based on the AN parameter received in step 1105.

Step 1106b (refer to step 206b): The N3IWF sends the registration request message received in step 1105 to the AMF selected in step 1106a.

The registration request message may be transmitted via an N2 message. When the N3IWF transmits the N2 message to the AMF, a RAN UE NGAP ID assigned by the N3IWF may be carried. The N3IWF supports an N2 interface (or referred to as an NGAP interface), and an N2 protocol (or referred to as an NGAP protocol) is originally used to define a protocol between an access network device and the AMF. Therefore, an IE of the RAN UE NGAP ID may directly inherit the RAN UE NGAP ID, but the AMF may know, based on an access network node identifier (Global N3IWF Node ID), that the N2 message is sent by the N3IWF. Subsequently, when the AMF sends an N2 message to the N3IWF, an AMF UE NGAP ID assigned by the AMF is also carried. The RAN UE NGAP ID and the AMF UE NGAP ID may identify an N2 message of the UE.

In an optional example, the N3IWF sends the access network information to the AMF. The access network information may be included in the NAS (for example, 5G-NAS) data packet, may be included in the N2 message, or may be included in the registration request message.

Step 1107 (refer to step 207): The UE, the AMF, an SMF, an authentication server function AUSF, a UDM, and the like perform an authentication and security procedure.

For example, first, the AMF selects the AUSF, and sends an authentication request message to the AUSF. The AUSF performs an authentication procedure on the UE, and obtains authentication data or information used for authentication from the UDM. All authentication-related data packets are encapsulated by using a NAS message. For example, the NAS message may be encapsulated by using a data packet of a 5G-NAS type in an EAP. After the authentication is complete, the AUSF sends a security anchor functionality SEAF key to the AMF. The AMF may obtain a NAS security key and an N3IWF key through derivation based on the SEAF key. The N3IWF key is used by the UE and the N3IWF to establish the IPsec SA.

Then, the AMF indicates, to the UE, that the authentication succeeds. For example, the AMF sends a NAS security mode command (NAS Security Mode Command) to the UE, to activate NAS security. The NAS Security Mode Command includes an EAP-success (EAP-Success) indication, indicating that EAP-authentication and key agreement (EAP-authentication and key agreement, EAP-AKA') authentication performed by a core network succeeds. The N3IWF forwards, to the UE, the NAS Security Mode Command sent by the AMF, and sends, to the AMF, a NAS security mode complete (NAS Security Mode Complete) message sent by the UE.

Step 1108a (refer to step 208): The AMF sends the N3IWF key to the N3IWF.

For example, the AMF sends a request message to the N3IWF, where the request message includes the N3IWF key. For example, the request message is an initial context setup request (Initial Context Setup Request) message or a next generation application protocol initial context setup request (NGAP Initial Context Setup Request) message. The AMF sends the N3IWF key to the N3IWF only after receiving the NAS Security Mode Complete message from the UE.

In an optional example, if the N3IWF does not obtain the access network information (for example, the access network information may be included in the NAS data packet) in step 1103 or step 1105, the AMF may send the access network information to the N3IWF via the N2 message (for specific content, refer to the foregoing descriptions, and details are not described again). The N2 message may be an initial context setup request Initial Context Setup Request or next generation application protocol initial context setup request (NGAP Initial Context Setup Request) message.

Step 1108b: The N3IWF sends an EAP-Success to the UE, indicating that authentication performed by the N3IWF on the UE succeeds, indicating that IPsec tunnel authentication succeeds, or indicating that the N3IWF and the UE complete the EAP-5G session.

For example, the N3IWF sends a response message (for example, an IKE_AUTH response message) to the UE, where the response message includes the EAP-Success.

In this case, the EAP-5G session is complete, and no EAP-5G data packet is exchanged subsequently.

Step 1109a (refer to step 209a): The UE and the N3IWF establish the IPsec SA by using the previously obtained N3IWF key, where the IPsec SA is referred to as "signalling IPsec SA (signalling IPsec SA)".

In this case, the signalling IPsec SA is configured to be run in a tunnel mode, and the N3IWF assigns one "inner" IP address and NAS_IP_ADDRESS to the UE. All subsequent NAS messages are transmitted via the signalling IPsec SA. For an uplink NAS message sent by the UE to the AMF, a source address is the "inner" IP address of the UE, and a destination address is NAS_IP_ADDRESS. For a downlink NAS message sent by the AMF to the UE, a source address is NAS_IP_ADDRESS, and a destination address is the "inner" IP address of the UE.

In a possible implementation, the N3IWF may assign the inner IP address and NAS_IP_ADDRESS to the UE based on the access network information (for specific content, refer to the foregoing descriptions, and details are not described again).

It should be noted that, in step 1103, the request message (for example, the IKE_AUTH request message) sent by the UE to the N3IWF through the IPsec SA does not include the AUTH payload (payload). However, in step 1109a, a request message (for example, an IKE_AUTH request message) sent by the UE to the N3IWF through the signalling IPsec SA may include an AUTH payload (payload).

Step 1109b (refer to step 209b): After establishing the signalling IPsec SA, the N3IWF notifies the AMF that a UE context has been created. For example, the N3IWF notifies, via an N2 message, the AMF that the UE context has been created. The N2 message may be an initial context setup request Initial Context Setup Request or next generation application protocol initial context setup request (NGAP Initial Context Setup Request) message.

In an optional example, the N3IWF may include IPsec tunnel information in the N2 message. The IPsec tunnel information may be used by the AMF to identify the transmission path. The IPsec tunnel information may include but is not limited to one or more pieces of the following information: an IPsec tunnel identifier and IPsec tunnel address information (the inner IP address and/or NAS_IP_ADDRESS).

Optionally, step 1110 (refer to step 210): The AMF may establish a mobility management policy (AM Policy Association Establishment) with a PCF.

In a possible implementation, if the AMF obtains the first capability information, the AMF may send the first capability information to the PCF. The PCF obtains a UE route selection policy (UE route selection policy, URSP) based on the first capability information. For example, when the first capability information indicates that the terminal device supports accessing the network by using the same access type or the same access technology, an access type preference (Access type preference) in a URSP rule sent by the PCF to the UE may include a multipath of a same access technology (for example, multi-path with same access type, multi-path with same RAT type, 3GPP access with multi-path, N3GPP access with multi-path, or a multipath). When the first capability information indicates that the terminal device does not support accessing the network by using the same access type or the same access technology, a URSP rule sent by the PCF to the UE may be an existing URSP rule or not include a multipath with a same access technology, that is, an access type preference (Access type preference) is multi-access.

The access type preference indicates an access type used by an MA PDU session. Currently, the parameter has the following three possible values: 3GPP access, N3GPP access, and multi-access. When a value is the multi-access, the UE establishes the MA PDU session.

In a scenario of this application, although the MA PDU is multi-path, the MA PDU may not be of a multi-access type, for example, different access technologies in one access type, or different transmission paths in a same access technology. In this application, the value of the access type preference further includes a multi-access technology (for example, a multi-RAT type), a multipath (for example, multi-path), a multipath of a same access type (for example, multi-path with same access type), a multipath of a same access technology (for example, multi-path with same RAT type), a multipath of a 3GPP access type (for example, 3GPP access with multi-path), or a multipath of a non-3GPP access type (for example, N3GPP access with multi-path).

When the value of the access type preference is the multi-access technology (for example, the multi-RAT type), the value may be further set to a combination of access technologies, for example, a combination of NR and NR, a combination of NR and a satellite, or a combination of an untrusted non-3GPP and a trusted non-3GPP.

When the value of the access type preference is the multipath (for example, the multi-path), identification information of a path may be further included, to indicate transmission paths through which the UE can establish the MA PDU session.

When the value of the access type preference is the multipath of the same access type (for example, the multi-path with same access type), the value may be further set to a combination of access technologies of the same access type, for example, a combination of NR and NR, a combination of NR and a satellite, or a combination of an untrusted non-3GPP and a trusted non-3 GPP.

When the value of the access type preference is the multi-path with same RAT type, the value may be further set to an access technology, for example, NR, satellite access, high-earth orbit satellite access, medium-earth orbit satellite access, low-earth orbit satellite access, trusted non-3GPP access, untrusted non-3GPP access, or wireline access.

When the value of the access type preference is the multipath of the 3GPP access type (for example, the 3GPP access with multi-path), the value may be further set to a combination of access technologies of the 3GPP access type, for example, any combination of access technologies such as NR, LTE, a satellite, a high-earth orbit satellite, a medium-earth orbit satellite, and a low-earth orbit satellite.

When the value of the access type preference is the multipath of the non-3GPP access type (for example, the N3GPP access with multi-path), the value may be further set to a combination of access technologies of the N3GPP access type, for example, any combination of access technologies such as a trusted non-3GPP access technology, an untrusted non-3GPP access technology, and a wireline access technology.

The following describes a structure of a possible URSP rule.

As shown in Table 5, a possible route selection descriptor (Route Selection Descriptor) is described.

**Table 5: Route selection descriptor (Route Selection Descriptor)**

| | |
|---|---|
| Access type preference | Indicates a preferred access type (3GPP, non-3GPP, or multi-access) when the UE establishes a PDU session for a matching application Indicates the preferred Access Type (3GPP or non-3GPP or Multi-Access) when the UE establishes a PDU Session for the matching application. |
| Access Type preference | |

The PCF may send the UE route selection policy (UE route selection policy, URSP) to the UE via the AMF. The URSP is usually sent by the PCF to the UE. The UE may determine, based on the URSP, whether a specific application can be associated with an established PDU session, whether data of the specific application can be offloaded outside the PDU session in a non-3GPP access manner (that is, not transmitted via the core network), whether a piece of specific application data can be sent in a ProSe Layer-3 UE-to-Network Relay manner, whether establishment of a new PDU session can be triggered, or the like.

In this application, in the URSP, the access type preference (Access Type preference) may be the multi access (Multi Access). Specifically, the Multi Access may further indicate a quantity of transmission paths, for example, two, three, or more transmission paths; and/or the Multi Access may further indicate that access types corresponding to the transmission paths are a 3GPP access type and a non-3GPP access type, multiple 3GPP access types, multiple non-3GPP access types, hybrid multi access, or the like.

Step 1111a (refer to step 211a): The AMF sends a NAS registration accept (NAS Registration Accept) message to the N3IWF.

The NAS registration accept message may be included in an N2 message.

Subsequently, when the AMF registers with the UDM, the AMF needs to provide the UDM with an access type of non-3GPP access. In an optional example, the AMF may send the access network information (for specific content, refer to the foregoing descriptions, and details are not described again) or the IPsec tunnel information (for specific content, refer to the foregoing descriptions, and details are not described again) to the UDM, to determine different transmission paths of a same access type. Optionally, the AMF may send, to the UDM, information used to identify different transmission paths, for example, access technology information and/or identification information. The identification information indicates different transmission paths, or the identification information indicates different transmission paths in a same access technology. For example, the access technology information and/or the identification information indicate/indicates a first transmission path or a second transmission path.

Step 1 1 1 1b (refer to step 211b): The N3IWF sends the NAS registration accept message to the UE through the signalling IPsec SA established in step 1109a.

Step 1112a (refer to step 1101a): The UE is connected to the untrusted non-3GPP access network, and is assigned one IP address.

Step 1112b (refer to step 1101b): The UE selects the N3IWF, and obtains the address information of the N3IWF. In this example, the N3IWF selected by the UE is the same as the N3IWF selected in step 1101b.

Next, a process similar to step 1102 to step 1112a may be performed, to register with the core network via the same N3IWF.

When performing a process that is the same as or similar to step 1103 or step 1105, the N3IWF may assign an N2 identifier based on the access network information.

When performing a process that is the same as or similar to step 1109a, the N3IWF may assign different UE inner IPs and/or NAS_IP_ADDRESS based on the access network information, or may assign a same UE inner IP based on the UE ID, and assign different NAS_IP_ADDRESS based on the access network information.

When performing a process that is the same as or similar to step 1106b, the AMF may determine, based on the access network information, the access technology type or information that identifies the transmission path. Alternatively, when performing a process that is the same as or similar to 1109b, the AMF determines, based on the IPsec tunnel information, the access technology type or information that identifies the transmission path, to distinguish between different transmission paths.

The foregoing describes the methods in embodiments of this application, and the following describes apparatuses in embodiments of this application. The methods and the apparatuses are based on a same technical concept. The methods and the apparatuses have similar principles for resolving problems. Therefore, for implementations of the apparatuses and the methods, refer to each other. Details are not repeated herein.

In embodiments of this application, division into functional modules may be performed on the apparatuses based on the foregoing method examples. For example, division into functional modules may be performed based on corresponding functions, or two or more functions may be integrated into one module. These modules may be implemented in a form of hardware, or may be implemented in a form of a software functional module. It should be noted that, in embodiments of this application, division into the modules is an example, is merely logic function division, and may be other division in specific implementation.

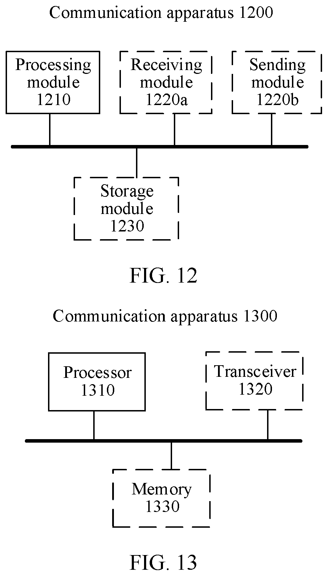

Based on a same technical concept as the foregoing methods, FIG. 12 is a diagram of a structure of a communication apparatus 1200. The apparatus 1200 may include a processing module 1210, and optionally, further include a receiving module 1220a, a sending module 1220b, and a storage module 1230. The processing module 1210 may be separately connected to the storage module 1230, the receiving module 1220a, and the sending module 1220b. The storage module 1230 may also be connected to the receiving module 1220a and the sending module 1220b.

In an example, the receiving module 1220a and the sending module 1220b may alternatively be integrated together and defined as a transceiver module.

In an example, the apparatus 1200 may be a session management device, or may be a chip or a functional unit used in the session management device. The apparatus 1200 has any function of the session management device in the foregoing methods. For example, the apparatus 1200 can perform the steps performed by the session management device in the methods in FIG. 9, FIG. 10a, FIG. 10b, and FIG. 11.

The receiving module 1220a may perform a receiving action performed by the session management device in the foregoing method embodiments.

The sending module 1220b may perform a sending action performed by the session management device in the foregoing method embodiments.

The processing module 1210 may perform an action other than the sending action and the receiving action in actions performed by the session management device in the foregoing method embodiments.

In an example, the processing module 1210 is configured to obtain tunnel information corresponding to transmission paths in a multi-access session, where the transmission paths include a first transmission path and a second transmission path, and access technologies corresponding to the first transmission path and the second transmission path are of a 3rd generation partnership project 3GPP access type, or access technologies corresponding to the first transmission path and the second transmission path are of a non-3rd generation partnership project 3GPP access type. The sending module 1220b is configured to send, to a mobility management device, the tunnel information and access technology information that correspond to the transmission paths, where the access technology is used by the mobility management device to determine an access network device.

In an example, the sending module 1220b is specifically configured to: send a transmission message to the mobility management device, where the transmission message includes first tunnel information and access technology information that correspond to the first transmission path, and second tunnel information and access technology information that correspond to the second transmission path; or send a first transmission message to the mobility management device, where the first transmission message includes first tunnel information and access technology information that correspond to the first transmission path, and send a second transmission message to the mobility management device, where the second transmission message includes second tunnel information and access technology information that correspond to the second transmission path.

In an example, the receiving module 1220a is configured to receive first information from the mobility management device, where the first information is used to obtain the tunnel information corresponding to the transmission paths, and the first information includes one or more of the following: a first quantity of transmission paths registered by a terminal device and one or more pieces of access technology information.

In an example, the sending module 1220b is further configured to send second information to a policy control device, where the second information is used to obtain steering information. The receiving module 1220a is further configured to receive the steering information from the policy control device, where the steering information includes steering information of the first transmission path and the second transmission path.

In an example, the processing module 1210 is specifically configured to assign the tunnel information corresponding to the transmission paths.

In an example, the receiving module 1220a is further configured to receive, from a user plane device, the tunnel information corresponding to the transmission paths.

In an example, when the first transmission path and the second transmission path correspond to a same access technology, the sending module 1220b is further configured to send indication information to the mobility management device, where the indication information indicates the first transmission path or the second transmission path.

In an example, the storage module 1230 may store computer-executable instructions of the method performed by the session management device, to enable the processing module 1210, the receiving module 1220a, and the sending module 1220b to perform the method performed by the session management device in the foregoing examples.

For example, the storage module may include one or more memories, and the memory may be a device configured to store a program or data in one or more devices or circuits. The storage module may be a register, a cache, a RAM, or the like, and the storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the apparatus 1200 may be a mobility management device, or may be a chip or a functional unit used in the mobility management device. The apparatus 1200 has any function of the mobility management device in the foregoing methods. For example, the apparatus 1200 can perform the steps performed by the mobility management device in the methods in FIG. 9, FIG. 10a, FIG. 10b, and FIG. 11.

The receiving module 1220a may perform a receiving action performed by the mobility management device in the foregoing method embodiments.

The sending module 1220b may perform a sending action performed by the mobility management device in the foregoing method embodiments.

The processing module 1210 may perform an action other than the sending action and the receiving action in actions performed by the mobility management device in the foregoing method embodiments.

In an example, the receiving module 1220a is configured to receive, from a session management device, tunnel information and access technology information that correspond to transmission paths in a multi-access session, where the transmission paths include a first transmission path and a second transmission path, and access technologies corresponding to the first transmission path and the second transmission path are of a 3rd generation partnership project 3GPP access type, or access technologies corresponding to the first transmission path and the second transmission path are of a non-3rd generation partnership project 3GPP access type.

The processing module 1210 is configured to: determine a first access network device based on access technology information corresponding to the first transmission path; and determine a second access network device based on access technology information corresponding to the second transmission path.

The sending module 1220b is configured to: send, to the first access network device, first tunnel information corresponding to the first transmission path; and send, to the second access network device, second tunnel information corresponding to the second transmission path.

In an example, the receiving module 1220a is specifically configured to: receive a transmission message from the session management device, where the transmission message includes the first tunnel information and the access technology information that correspond to the first transmission path, and the second tunnel information and the access technology information that correspond to the second transmission path; or receive a first transmission message from the session management device, where the first transmission message includes the first tunnel information and the access technology information that correspond to the first transmission path, and receive a second transmission message from the session management device, where the second transmission message includes the second tunnel information and the access technology information that correspond to the second transmission path.

In an example, the sending module 1220b is further configured to send first information to the session management device, where the first information is used to obtain the tunnel information corresponding to the transmission paths, and the first information includes one or more of the following: a first quantity of transmission paths registered by a terminal device and one or more pieces of access technology information.

In an example, the receiving module 1220a is further configured to receive steering information of the first transmission path and the second transmission path. The sending module 1220b is further configured to send the steering information to the terminal device.

In an example, when the first transmission path and the second transmission path correspond to a same access technology, the receiving module 1220a is further configured to receive indication information from the session management device, where the indication information indicates the first transmission path or the second transmission path. The processing module is specifically configured to: determine the first access network device based on the access technology information corresponding to the first transmission path and the indication information; and determine the second access network device based on the access technology information corresponding to the second transmission path and the indication information.

In an example, when an access network device corresponding to the first transmission path and an access network device corresponding to the second transmission path each are a non-3GPP access network device, the receiving module 1220a is further configured to receive third information from a first non-3GPP access network device on the first transmission path, where the third information includes one or more of the following: a quantity of internet protocol security child security associations IPsec child SAs established between the first non-3GPP access network device and the terminal device, a differentiated services code point DSCP value corresponding to each IPsec child SA, a quality of service flow identifier QFI associated with each IPsec child SA, and an identifier corresponding to each IPsec child SA. The sending module 1220b is further configured to send the third information to a second non-3GPP access network device on the second transmission path, where the third information is used by the second non-3GPP access network device to establish a user plane resource with the terminal device.

In an example, in a registration process of the terminal device, the processing module 1210 is further configured to: obtain, by the device, access network information, where the access network information indicates information about an access technology used by the terminal device; and determine, based on the information about the access technology used by the terminal device, the first quantity of transmission paths registered by the terminal device or access technology information corresponding to the transmission paths.

In an example, the storage module 1230 may store computer-executable instructions of the method performed by the mobility management device, to enable the processing module 1210, the receiving module 1220a, and the sending module 1220b to perform the method performed by the mobility management device in the foregoing examples.

For example, the storage module may include one or more memories, and the memory may be a device configured to store a program or data in one or more devices or circuits. The storage module may be a register, a cache, a RAM, or the like, and the storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 13 is a block diagram of a communication apparatus 1300.

The apparatus 1300 may include a processor 1310, and optionally, further include a transceiver 1320 and a memory 1330. The transceiver 1320 may be configured to: receive a program or instructions and transmit the program or the instructions to the processor 1310. Alternatively, the transceiver 1320 may be used by the apparatus 1300 to communicate and interact with another communication device, for example, exchange control signalling and/or service data. The transceiver 1320 may be a code and/or data read/write transceiver, or the transceiver 1320 may be a signal transmission transceiver between the processor and a transceiver machine. The processor 1310 and the memory 1330 are electrically coupled to each other.

In an example, the apparatus 1300 may be a session management device, or may be a chip used in the session management device. It should be understood that the apparatus has any function of the session management device in the foregoing methods. For example, the apparatus 1300 can perform the steps performed by the session management device in the methods in FIG. 9, FIG. 10a, FIG. 10b, and FIG. 11. For example, the memory 1330 is configured to store a computer program. The processor 1310 may be configured to invoke the computer program or instructions stored in the memory 1330, to perform the method performed by the session management device in the foregoing examples, or perform, via the transceiver 1320, the method performed by the session management device in the foregoing examples.

In an example, the apparatus 1300 may be a mobility management device, or may be a chip used in the mobility management device. It should be understood that the apparatus has any function of the mobility management device in the foregoing methods. For example, the apparatus 1300 can perform the steps performed by the mobility management device in the methods in FIG. 9, FIG. 10a, FIG. 10b, and FIG. 11. For example, the memory 1330 is configured to store a computer program. The processor 1310 may be configured to invoke the computer program or instructions stored in the memory 1330, to perform the method performed by the mobility management device in the foregoing examples, or perform, via the transceiver 1320, the method performed by the mobility management device in the foregoing examples.

The processing module 1210 in FIG. 12 may be implemented by using the processor 1310.

The receiving module 1220a and the sending module 1220b in FIG. 12 may be implemented by using the transceiver 1320. Alternatively, the transceiver 1320 includes a receiver and a transmitter. The receiver performs a function of the receiving module, and the transmitter performs a function of the sending module.

The storage module 1230 in FIG. 12 may be implemented by using the memory 1330.

As a possible product form, the apparatus may be implemented by a general-purpose processor (the general-purpose processor may also be referred to as a chip or a chip system).

In a possible implementation, a general-purpose processor that implements an apparatus used in the session management device or an apparatus used in the mobility management device includes a processing circuit (the processing circuit may also be referred to as a processor), and optionally, further includes an input/output interface and a storage medium (the storage medium may also be referred to as a memory) that are internally connected to and communicate with the processing circuit. The storage medium is configured to store instructions executed by the processing circuit, to perform the method performed by the session management device or the mobility management device in the foregoing examples.

The processing module 1210 in FIG. 12 may be implemented by using the processing circuit.

The receiving module 1220a and the sending module 1220b in FIG. 12 may be implemented by using the input/output interface. Alternatively, the input/output interface includes an input interface and an output interface. The input interface performs a function of the receiving module, and the output interface performs a function of the sending module.

The storage module 1230 in FIG. 12 may be implemented by using the storage medium.

As a possible product form, the apparatus in embodiments of this application may be further implemented by using the following: one or more FPGAs (field programmable gate arrays), a PLD (programmable logic device), a controller, a state machine, gate logic, a discrete hardware component, any other appropriate circuit, or any combination of circuits that can perform various functions described in this application.

An embodiment of this application further provides a computer-readable storage medium, storing a computer program. When the computer program is executed by a computer, the computer may be enabled to perform the foregoing communication method. In other words, the computer program includes instructions used to implement the foregoing communication method.

An embodiment of this application further provides a computer program product, including computer program code. When the computer program code is run on a computer, the computer is enabled to perform the communication method provided above.

An embodiment of this application further provides a communication system. The communication system includes a session management device and a mobility management device that perform the foregoing communication method. Optionally, an access network device and one or more of network elements mentioned in this application may be further included.

In addition, the processor mentioned in embodiments of this application may be a central processing unit (central processing unit, CPU) or a baseband processor, where the baseband processor and the CPU may be integrated or separated; or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another appropriate type.

The transceiver mentioned in embodiments of this application may include a separate transmitter and/or a separate receiver, or the transmitter and the receiver may be integrated. The transceiver may operate according to instructions of a corresponding processor. Optionally, the transmitter may correspond to a transmitter machine in a physical device, and the receiver may correspond to a receiver machine in the physical device.

A person of ordinary skill in the art may be aware that, method steps and units described in combination with embodiments disclosed in this specification may be implemented by electronic hardware, computer software, or a combination thereof. To clearly describe interchangeability between the hardware and the software, the foregoing has generally described steps and compositions of each embodiment according to functions. Whether the functions are performed by hardware or software depends on a particular application and a design constraint condition of the technical solutions. A person of ordinary skill in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on multiple mobility management devices. Some or all of the units may be selected according to actual needs to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part making a contribution, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The term "and/or" in this application describes an association relationship between associated objects and represents that three relationships may exist. For example, A and/or B may represent the following three cases: Only A exists, both A and B exist, and only B exists. The character "/" usually indicates an "or" relationship between the associated objects. "A plurality of" in this application means two or more. In addition, it should be understood that, in the descriptions of this application, terms such as "first" and "second" are merely used for distinguishing and description, but should not be understood as indicating or implying relative importance, or should not be understood as indicating or implying a sequence.

## Claims

1. A communication method, comprising:
obtaining, by a session management device, tunnel information corresponding to transmission paths in a multi-access session, wherein the transmission paths comprise a first transmission path and a second transmission path, and access technologies corresponding to the first transmission path and the second transmission path are of a 3rd generation partnership project 3GPP access type, or access technologies corresponding to the first transmission path and the second transmission path are of a non-3rd generation partnership project 3GPP access type; and
sending, by the session management device to a mobility management device, the tunnel information and access technology information that correspond to the transmission paths, wherein the access technology is used by the mobility management device to determine an access network device.

2. The method according to claim 1, wherein the sending, by the session management device to a mobility management device, the tunnel information corresponding to the transmission paths and access technology information that correspond to the transmission paths comprises:
sending, by the session management device, a transmission message to the mobility management device, wherein the transmission message comprises first tunnel information and access technology information that correspond to the first transmission path, and second tunnel information and access technology information that correspond to the second transmission path; or
sending, by the session management device, a first transmission message to the mobility management device, wherein the first transmission message comprises first tunnel information and access technology information that correspond to the first transmission path; and sending, by the session management device, a second transmission message to the mobility management device, wherein the second transmission message comprises second tunnel information and access technology information that correspond to the second transmission path.

3. The method according to claim 1 or 2, wherein before the sending, by the session management device to a mobility management device, the tunnel information and access technology information that correspond to the transmission paths, the method further comprises:
receiving, by the session management device, first information from the mobility management device, wherein the first information is used to obtain the tunnel information corresponding to the transmission paths, and the first information comprises one or more of the following: a first quantity of transmission paths registered by a terminal device and one or more access technologies.

4. The method according to any one of claims 1 to 3, further comprising:
sending, by the session management device, second information to a policy control device, wherein the second information is used to obtain steering information; and
receiving, by the session management device, the steering information from the policy control device, wherein the steering information comprises steering information of the first transmission path and the second transmission path.

5. The method according to claim 4, wherein the second information comprises one or more of the following:
the first quantity of transmission paths registered by the terminal device, the one or more access technologies, and a quantity of access technologies.

6. The method according to claim 4 or 5, wherein the steering information indicates the terminal device to transmit data through a target transmission path, and the target transmission path is one or more of the transmission paths registered by the terminal device.

7. The method according to any one of claims 1 to 6, wherein the obtaining, by a session management device, tunnel information corresponding to transmission paths comprises:
assigning, by the session management device, the tunnel information corresponding to the transmission paths; or
receiving, by the session management device from a user plane device, the tunnel information corresponding to the transmission paths.

8. The method according to any one of claims 1 to 7, further comprising:
when the first transmission path and the second transmission path correspond to a same access technology, sending, by the session management device, indication information to the mobility management device, wherein the indication information indicates the first transmission path or the second transmission path.

9. The method according to claim 8, wherein the indication information comprises one or more of the following: an identifier of an access sub-technology, an identifier of an access network device, an identifier of a path, and IPsec tunnel information.

10. The method according to any one of claims 1 to 9, wherein an access network device corresponding to the first transmission path is any one of the following:
a 3GPP access network device, a trusted non-3GPP access network device, an untrusted non-3GPP access network device, or a wireline access gateway; and
an access network device corresponding to the second transmission path is any one of the following:
a 3GPP access network device, a trusted non-3GPP access network device, an untrusted non-3GPP access network device, or a wireline access gateway.

11. The method according to claim 10, wherein the 3GPP access network device is any one of the following: an eNodeB, an NG-RAN, or a gNodeB;
the trusted non-3GPP access network device is any one of the following: a trusted non-3GPP gateway function TNGF, a trusted WLAN interworking function TWIF, or a trusted non-3GPP access point TNAP;
the untrusted non-3GPP access network device is any one of the following: a non-3GPP interworking function N3IWF; and
the wireline gateway is any one of the following: a wireline access gateway function W-AGF network element.

12. A communication method, comprising:
receiving, by a mobility management device from a session management device, tunnel information and access technology information that correspond to transmission paths in a multi-access session, wherein the transmission paths comprise a first transmission path and a second transmission path, and access technologies corresponding to the first transmission path and the second transmission path are of a 3rd generation partnership project 3GPP access type, or access technologies corresponding to the first transmission path and the second transmission path are of a non-3rd generation partnership project 3GPP access type;
determining, by the mobility management device, a first access network device based on access technology information corresponding to the first transmission path; and sending, by the mobility management device to the first access network device, first tunnel information corresponding to the first transmission path; and
determining, by the mobility management device, a second access network device based on access technology information corresponding to the second transmission path; and sending, by the mobility management device to the second access network device, second tunnel information corresponding to the second transmission path.

13. The method according to claim 12, wherein the receiving, by a mobility management device from a session management device, tunnel information and access technology information that correspond to transmission paths comprises:
receiving, by the mobility management device, a transmission message from the session management device, wherein the transmission message comprises the first tunnel information and the access technology information that correspond to the first transmission path, and the second tunnel information and the access technology information that correspond to the second transmission path; or
receiving, by the mobility management device, a first transmission message from the session management device, wherein the first transmission message comprises the first tunnel information and the access technology information that correspond to the first transmission path; and receiving, by the mobility management device, a second transmission message from the session management device, wherein the second transmission message comprises the second tunnel information and the access technology information that correspond to the second transmission path.

14. The method according to claim 12 or 13, wherein before the receiving, by a mobility management device from a session management device, tunnel information and access technology information that correspond to transmission paths, the method further comprises:
sending, by the mobility management device, first information to the session management device, wherein the first information is used to obtain the tunnel information corresponding to the transmission paths, and the first information comprises one or more of the following: a first quantity of transmission paths registered by a terminal device and one or more pieces of access technology information.

15. The method according to any one of claims 12 to 14, further comprising:
receiving, by the mobility management device, steering information of the first transmission path and the second transmission path; and
sending, by the mobility management device, the steering information to the terminal device.

16. The method according to any one of claims 12 to 15, further comprising:
when the first transmission path and the second transmission path correspond to a same access technology, receiving, by the mobility management device, indication information from the session management device, wherein the indication information indicates the first transmission path or the second transmission path, wherein
the determining, by the mobility management device, a first access network device based on access technology information corresponding to the first transmission path comprises: determining, by the mobility management device, the first access network device based on the access technology information corresponding to the first transmission path and the indication information; and
the determining, by the mobility management device, a second access network device based on access technology information corresponding to the second transmission path comprises: determining, by the mobility management device, the second access network device based on the access technology information corresponding to the second transmission path and the indication information.

17. The method according to claim 16, wherein the indication information comprises one or more of the following: an identifier of an access sub-technology, an identifier of an access network device, an identifier of a path, and IPsec tunnel information.

18. The method according to any one of claims 12 to 17, wherein an access network device corresponding to the first transmission path is any one of the following:
a 3GPP access network device, a trusted non-3GPP access network device, an untrusted non-3GPP access network device, or a wireline access gateway; and
an access network device corresponding to the second transmission path is any one of the following:
a 3GPP access network device, a trusted non-3GPP access network device, an untrusted non-3GPP access network device, or a wireline access gateway.

19. The method according to claim 18, wherein the 3GPP access network device is any one of the following: an eNodeB, an NG-RAN, or a gNodeB;
the trusted non-3GPP access network device is any one of the following: a trusted non-3GPP gateway function TNGF, a trusted WLAN interworking function TWIF, or a trusted non-3GPP access point TNAP;
the untrusted non-3GPP access network device is any one of the following: a non-3GPP interworking function N3IWF; and
the wireline gateway is any one of the following: a wireline access gateway function W-AGF network element.

20. The method according to any one of claims 12 to 19, further comprising:
when the access network device corresponding to the first transmission path and the access network device corresponding to the second transmission path each are a non-3GPP access network device, receiving, by the mobility management device, third information from a first non-3GPP access network device on the first transmission path, wherein the third information comprises one or more of the following: a quantity of internet protocol security child security associations IPsec child SAs established between the first non-3GPP access network device and the terminal device, a differentiated services code point DSCP value corresponding to each IPsec child SA, a quality of service flow identifier QFI associated with each IPsec child SA, and an identifier corresponding to each IPsec child SA; and
sending, by the mobility management device, the third information to a second non-3GPP access network device on the second transmission path, wherein the third information is used by the second non-3GPP access network device to establish a user plane resource with the terminal device.

21. The method according to claim 20, wherein the access network device corresponding to the first transmission path is the N3IWF, and the access network device corresponding to the second transmission path is the TNGF.

22. The method according to any one of claims 12 to 21, further comprising:
in a registration process of the terminal device, obtaining, by the mobility management device, access network information, wherein the access network information indicates information about an access technology used by the terminal device; and
determining, by the mobility management device based on the information about the access technology used by the terminal device, the first quantity of transmission paths registered by the terminal device or access technology information corresponding to the transmission paths.

23. The method according to claim 22, wherein the access network information comprises one or more of the following:
an access node type, an access technology type, an access node name, an access node identifier, and an internet protocol security IPsec identifier.

24. A communication apparatus, comprising a module for implementing the method according to any one of claims 1 to 11 or a module for implementing the method according to any one of claims 12 to 23.

25. A communication apparatus, comprising a processor, wherein the processor is coupled to a memory;
the memory is configured to store computer programs or instructions; and
the processor is configured to: execute some or all of the computer programs or instructions in the memory; and when the some or all of the computer programs or instructions are executed, implement the method according to any one of claims 1 to 11, or implement the method according to any one of claims 12 to 23.

26. A communication apparatus, comprising a processor and a memory, wherein
the memory is configured to store computer programs or instructions; and
the processor is configured to: execute some or all of the computer programs or instructions in the memory; and when the some or all of the computer programs or instructions are executed, implement the method according to any one of claims 1 to 11, or implement the method according to any one of claims 12 to 23.

27. A chip system, wherein the chip system comprises a processing circuit, and the processing circuit is coupled to a storage medium; and
the processing circuit is configured to: execute some or all computer programs or instructions in the storage medium; and when the some or all computer programs or instructions are executed, implement the method according to any one of claims 1 to 11, or implement the method according to any one of claims 12 to 23.

28. A computer-readable storage medium, configured to store a computer program, wherein the computer program comprises instructions for implementing the method according to any one of claims 1 to 11 or instructions for implementing the method according to any one of claims 12 to 23.

29. A computer program product, wherein the computer program product comprises computer program code, and when the computer program code is run on a computer, the computer is enabled to perform the method according to any one of claims 1 to 11, or perform the method according to any one of claims 12 to 23.

30. A communication system, comprising a session management device that performs the method according to any one of claims 1 to 11 and a mobility management device that performs the method according to any one of claims 12 to 23.
